(19) **Europäisches Patentamt / European Patent Office / Office européen des brevets**

(11) **EP 4 430 569 B1**

(12) **FASCICULE DE BREVET EUROPEEN**

(45) Date de publication et mention de la délivrance du brevet:
**29.04.2026 Bulletin 2026/18**

(21) Numéro de dépôt: **22813320.3**

(22) Date de dépôt: **08.11.2022**

(51) Classification Internationale des Brevets (IPC):
***G06T 7/70*** *(2017.01)*

(52) Classification Coopérative des Brevets (CPC):
**G06T 7/70;** G06T 2207/10016; G06T 2207/30252; G06T 2207/30256

(86) Numéro de dépôt international:
**PCT/EP2022/081153**

(87) Numéro de publication internationale:
**WO 2023/083821 (19.05.2023 Gazette 2023/20)**

(54) **PROCÉDÉ D'ESTIMATION DYNAMIQUE DU TANGAGE D'UN VÉHICULE AUTOMOBILE AU MOYEN D'UN CAPTEUR D'ACQUISITION D'IMAGES**

VERFAHREN ZUR DYNAMISCHEN SCHÄTZUNG DER NICKBEWEGUNG EINES KRAFTFAHRZEUGS MITTELS EINES BILDERFASSUNGSSENSORS

METHOD FOR THE DYNAMIC ESTIMATION OF THE PITCH OF A MOTOR VEHICLE BY MEANS OF AN IMAGE CAPTURE SENSOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.11.2021 FR 2111851**

(43) Date de publication de la demande:
**18.09.2024 Bulletin 2024/38**

(73) Titulaire: **AUMOVIO Autonomous Mobility Germany GmbH 85057 Ingolstadt (DE)**

(72) Inventeurs:
- **FERRET, Gatien 31100 TOULOUSE (FR)**
- **CHOCHOY, Hugo 31100 TOULOUSE (FR)**
- **BERGER, Matthieu 31100 TOULOUSE (FR)**

(74) Mandataire: **Aumovio Corporation AUMOVIO Germany GmbH Taunusstraße 36 80807 München (DE)**

(56) Documents cités:
EP-B1- 3 579 191    CN-A- 111 323 047
US-B2- 6 678 631

**Description**

**[Domaine technique]**

La présente demande de brevet se rapporte au domaine des systèmes d'aide à la conduite par un capteur d'acquisition d'images du type caméra vidéo, et plus particulièrement à l'optimisation de l'acquisition d'informations relatives à l'environnement d'un véhicule automobile par un procédé d'estimation dynamique du tangage au moyen d'un capteur d'acquisition d'images qui est embarqué sur le véhicule.

**[Etat de la technique antérieure]**

Les systèmes d'aide à la conduite automobile, connus sous l'acronyme ADAS, de l'anglais « Advanced Driver Assistance Systems », sont de plus en plus répandus dans les véhicules automobiles. Ils offrent un nombre croissant de fonctionnalités avec pour objectif d'améliorer le confort et la sécurité des utilisateurs de véhicules. A terme, il est envisageable de produire des véhicules à conduite autonome.

Nombre de fonctionnalités offertes par de tels systèmes s'appuient sur une analyse en temps réel de l'environnement immédiat du véhicule dans lequel ils sont embarqués. Qu'il s'agisse, par exemple, d'aider au freinage d'urgence ou d'améliorer le contrôle de trajectoire d'une voiture, la prise en compte à chaque instant de caractéristiques de l'environnement du véhicule est nécessaire pour assurer les fonctionnalités des systèmes d'aide à la conduite.

Dans ce contexte, une des possibilités pour l'acquisition d'informations relatives à l'environnement immédiat d'un véhicule automobile est d'utiliser des moyens d'acquisition et d'analyse d'images. Un véhicule peut ainsi être équipé d'une ou plusieurs caméras vidéo destinées à observer son environnement, à chaque instant, dans une ou plusieurs directions d'observation. Les images recueillies par les caméras sont alors traitées par le système d'aide à la conduite et celui-ci peut les utiliser pour potentiellement déclencher une action d'aide à la conduite, par exemple déclencher une alerte sonore et/ou visuelle, voire déclencher un freinage ou un changement de trajectoire du véhicule automobile.

Ce type de fonctionnement suppose que les images recueillies par la ou les caméras permettent de déduire d'une manière fiable les informations pertinentes souhaitées sur l'environnement du véhicule, et avec un coût de calcul aussi réduit que possible. Cela implique notamment que les images acquises soient effectivement représentatives de la réalité observée et sans dégradations susceptibles de fausser la perception de l'environnement par le système d'aide à la conduite. Cela implique aussi, pour certaines fonctionnalités, qu'il soit possible pour le système d'aide à la conduite, à partir des images acquises par la caméra, de localiser correctement les divers objets présents dans l'espace tridimensionnel dans lequel le véhicule évolue.

C'est le cas, par exemple, dans la situation classique où le système d'aide à la conduite exploite les images acquises par une caméra montée sur le pare-brise avant d'un véhicule, au niveau de son rétroviseur central. Cette exploitation présuppose en effet, pour certaines fonctionnalités, de connaître la relation entre les coordonnées spatiales d'un point de l'espace avec le point correspondant dans l'image acquise par la caméra qui suppose donc de connaître la relation spatiale unissant la caméra et le véhicule. Pour s'assurer de la bonne connaissance de ces relations, il est connu de procéder, plus ou moins régulièrement, à un calibrage de la caméra. Ce calibrage a pour but de déterminer des paramètres, dits paramètres intrinsèques et paramètres extrinsèques, de la caméra.

Les paramètres intrinsèques sont liés aux caractéristiques techniques propres de la caméra, comme par exemple, sa focale, la position de son centre optique ou son modèle de distorsion. Leur calibrage permet d'estimer ces paramètres et il est donc réalisé en usine en fin de chaîne de production de la caméra.

Les paramètres extrinsèques correspondent, quant à eux, au positionnement et à l'orientation de la caméra par rapport à un repère monde et supposé, sous réserve d'une éventuelle inclinaison du véhicule par rapport à la route sur laquelle le véhicule circule, parallèle à ladite route. Ces paramètres comprennent les trois translations et les trois rotations nécessaires pour passer des coordonnées d'un point, exprimées dans un repère défini ci-dessus et appelé « repère monde », aux coordonnées de ce point exprimées dans un repère lié à la caméra appelé « repère caméra ». Le calibrage de ces paramètres (six au total) permet alors d'estimer le positionnement et l'orientation de la caméra par rapport à la route. De plus, s'agissant de paramètres amenés à varier plus fréquemment que les paramètres intrinsèques, par exemple en cas d'un changement de charge du véhicule, le calibrage des paramètres extrinsèques peut être opéré relativement régulièrement afin d'ajuster en permanence leurs valeurs à la situation constatée.

La notion de « calibrage » porte souvent sur une variable qui oscille peu et qui détermine un angle absolu entre la caméra et le repère monde. C'est une moyenne, ou une valeur nominale, qui ne prend pas en compte les oscillations de la caméra.

**On** distingue le calibrage en fin de chaîne de production du véhicule, qui utilise une mire de production, et le calibrage dit « en ligne » qui s'appuie sur le flux optique de la caméra.

Finalement, le calibrage de la caméra a pour objectif de faciliter l'exploitation des images acquises par la caméra afin d'améliorer la localisation dans l'espace des divers objets observés.

Malgré cela, quelle que soit la régularité avec laquelle le calibrage peut être opéré, il ne permet pas de suivre le tangage et le roulis dynamique qui engendrent des changements d'orientation dynamiques importants de la caméra.

On entend par tangage de la caméra, un mouvement angulaire de la caméra autour d'un axe transversal perpendiculaire à la trajectoire longitudinale du véhicule automobile, et on entend par roulis un mouvement angulaire de la caméra autour d'un axe longitudinal parallèle à la trajectoire longitudinale du véhicule automobile, leur valeur est estimée à l'aide du flux optique de la caméra.

La notion de tangage et de roulis dynamique représente la même grandeur physique que le calibrage, c'est-à-dire l'angle de la caméra par rapport à un repère, généralement le repère « monde ».

Cependant, le tangage et le roulis dynamique ne représentent pas une moyenne ou des valeurs nominales mais une valeur instantanée qui oscille autour de la valeur de calibrage.

Typiquement, dans des situations telles que le franchissement d'un dos d'âne, une accélération ou une décélération importante, ou un changement de pente soudain, la valeur du tangage dynamique, ou instantané, peut temporairement s'écarter, de façon significative, de sa valeur calibrée. De même, lorsque le véhicule roule sur un coussin berlinois ou un nid de poule de manière « asymétrique », autrement dit lorsque seules les roues se trouvant d'un côté du véhicule franchissent le coussin berlinois ou le nid de poule, ou dans le cas d'un fort virage, la valeur du roulis dynamique, ou instantané, peut temporairement s'écarter, de façon significative, de sa valeur calibrée.

Or, la bonne connaissance de l'angle correspondant au tangage et de l'angle correspondant au roulis, a un impact déterminant sur la localisation dans l'espace des objets observés par la caméra d'un véhicule automobile. Dès lors, sa mauvaise appréciation, même temporaire, est susceptible d'affecter la bonne détermination de la position des objets environnant le véhicule et donc de limiter voire de bloquer certaines fonctionnalités du système d'aide à la conduite qui reposent sur cette détermination.

Pour estimer le tangage dynamique, que l'on désignera simplement par tangage dans la suite, et le roulis dynamique que l'on désignera simplement par roulis dans la suite, d'une caméra embarquée dans un véhicule de façon dynamique, c'est-à-dire de manière à apprécier les variations rapides liées à des changements ponctuels d'environnement de conduite, on connaît déjà l'utilisation de la méthode de cartographie et localisation simultanées ou SLAM de l'anglais « Simultaneous Localization And Mapping ».

Cette méthode consiste, en premier lieu, à construire simultanément la cartographie d'un lieu et à s'y localiser. Elle peut par ailleurs permettre d'estimer le tangage et le roulis de la caméra en s'appuyant notamment sur le suivi, dans l'image, de certains objets remarquables et de leur déplacement d'une image à l'autre. Elle est toutefois largement sujette au bruit de détection et est relativement limitée en termes de réactivité à laquelle la valeur du tangage et la valeur du roulis peuvent être effectivement actualisées dès lors qu'une estimation robuste est l'objectif visé.

Par ailleurs, une autre méthode connue consiste à traiter les images acquises par la caméra embarquée d'un véhicule pour y reconnaître, dans chaque image, la position des lignes de marquage de la route sur laquelle le véhicule circule, et, pour en déduire, en temps réel, un angle de tangage de la caméra. Cette méthode peut permettre d'estimer dynamiquement le tangage mais suppose de circuler sur une route ayant des lignes marquées parallèles et reconnaissables.

De plus, dans le cas des deux méthodes évoquées jusqu'ici, l'estimation de la valeur de tangage et de la valeur de roulis n'est performante que dans des cas où celles-ci restent suffisamment proches de valeurs attendues. Autrement dit, dès que l'amplitude de la variation du tangage est très grande, comme c'est le cas par exemple pour le franchissement d'un dos d'âne ou pour une forte accélération, ou que l'amplitude de la variation du roulis est très grande, comme c'est le cas par exemple pour le franchissement d'un coussin berlinois pour d'un nid de poule, les deux méthodes mentionnées précédemment peuvent ne pas réussir à suivre les changements d'angle de la caméra.

Pour pallier les inconvénients des deux méthodes évoquées, on connaît un procédé d'estimation dynamique du tangage et du roulis d'un véhicule automobile qui est décrit et représenté dans le document EP3579191B1.

Le procédé décrit dans le document EP3579191B1 comporte une première étape de calcul d'un angle d'inclinaison extrinsèque d'une caméra estimé par intégration du mouvement relatif de la caméra à un instant t courant, et une seconde étape d'estimation d'un angle d'inclinaison extrinsèque de la caméra avec correction de divergence.

On entend par « angle d'inclinaison » aussi bien un angle de tangage qu'un angle de roulis, c'est à dire l'angle entre le repère caméra et un repère qui est généralement le repère monde.

La première étape de calcul détermine l'angle d'inclinaison par l'équation suivante : $\theta_{\text{int}}(t) = \theta(t-1) - \theta_{rel}(t)$ avec $\theta(t-1)$ l'angle d'inclinaison extrinsèque absolu de la caméra à un instant précédent t-1, et $\theta_{rel}(t)$ l'angle le relatif de la caméra à l'instant t courant qui exprime l'angle d'inclinaison du capteur entre ledit instant précédent t-1 et l'instant t courant.

La seconde étape estime l'angle d'inclinaison de la caméra par l'équation suivante :

$$\theta(t) = \theta_{\text{int}}(t) + DAC(t) * \left(\theta_{calib}(t) - \theta_{\text{int}}(t)\right)$$

avec $\theta(t)$ l'angle d'inclinaison extrinsèque absolu de la caméra, à l'instant t courant, $\theta_{\text{int}}(t)$ l'angle d'inclinaison extrinsèque de la caméra estimé par intégration du mouvement relatif de la caméra à un instant t courant au cours de la première étape de calcul précédente, à l'instant t courant, $DAC(t)$ un coefficient d'anti-divergence compris entre zéro et un, à l'instant t courant, et $\theta_{calib}(t)$ l'angle d'inclinaison extrinsèque de calibrage à l'instant t courant, qui est connu à chaque instant et qui correspond à la valeur nominale de l'angle d'inclinaison de la caméra en l'absence de dynamique du véhicule automobile.

Le coefficient d'anti-divergence est aussi connu sous l'acronyme DAC pour la dénomination anglaise « Drift Avoiding Coefficient ».

Avantageusement, le procédé décrit dans le document EP3579191B1 prend en compte le mouvement de la caméra et la multitude des scénarios de la route sans pour autant diverger, par l'emploi du coefficient d'anti-divergence.

Toutefois, le procédé décrit dans le document EP3579191B1 n'est pas assez performant dans le scenario d'un changement de pente de la route, notamment lorsque le véhicule équipé de la caméra et l'objet suivi sont situés sur une portion de route de pente distincte, par exemple si l'objet suivi est situé sur une pente ascendante alors que le véhicule est situé à la base de cette pente.

En effet, l'estimation de l'angle d'inclinaison selon le procédé décrit dans le document EP3579191 B1 est basé sur une intégration du mouvement relatif de la caméra, de sorte que le changement de pente n'est pas pris en compte.

A l'inverse, la méthode décrite précédemment qui est basée sur la reconnaissance des lignes de marquage au sol est plus performante pour estimer l'angle de tangage de la caméra en cas de changement de pente.

Le brevet US 6678631 B2 (DELPHI TECH INC [US]) (2004-01-13) divulgue un estimateur d'angle d'attitude (par exemple, le roulis). L'estimateur d'angle d'attitude utilise un capteur de vitesse angulaire d'attitude pour détecter la vitesse angulaire d'attitude d'un véhicule, un premier accéléromètre pour détecter l'accélération verticale du véhicule, et un deuxième accéléromètre pour détecter l'accélération horizontale (par exemple latérale) du véhicule. Un contrôleur détermine un angle d'attitude basé sur l'accélération en fonction des accélérations verticale et horizontale détectées, et détermine en outre une estimation de l'angle d'attitude en fonction du taux d'attitude angulaire et de l'angle d'attitude basé sur l'accélération.

Le brevet CN 111323047 A (BEIJING HUAHANG RADIO MEASUREMENT RES INST) (2020-06-23) divulgue un procédé de compensation dynamique de l'erreur zéro d'un gyroscope basé sur un accéléromètre. L'erreur zéro du gyroscope est compensée de manière dynamique par fusion en temps réel et fusion à long terme. Par rapport à la compensation statique, la compensation dynamique omet les processus d'acquisition des données d'erreur de vitesse angulaire du gyroscope, d'analyse hors ligne, d'établissement de modèles et autres dans un environnement statique, et l'accéléromètre est utilisé pour compenser et corriger dynamiquement l'erreur zéro du gyroscope, de manière à garantir une sortie en temps réel et de haute précision du gyroscope.

**[Exposé de l'invention]**

La présente invention a notamment pour but de résoudre les inconvénients de l'art antérieur précité en améliorant le procédé décrit dans le document EP3579191B1 en s'appuyant sur l'estimation du tangage de la méthode basée sur la reconnaissance des lignes de marquage au sol.

On atteint cet objectif, ainsi que d'autres qui apparaîtront à la lecture de la description qui suit, avec un procédé d'estimation du tangage d'un véhicule automobile au moyen d'au moins un capteur d'acquisition d'images qui est embarqué sur ledit véhicule automobile selon la revendication 1.

Ainsi, le procédé selon l'invention permet d'améliorer l'estimation de l'angle de tangage du véhicule en réalisant une estimation de l'angle de tangage suivant deux méthodes complémentaires et en affinant le cas échéant l'angle de tangage estimé, selon le résultat de la comparaison des deux méthodes.

Suivant d'autres caractéristiques optionnelles du procédé selon invention, prises seules ou en combinaison :

- la troisième étape de comparaison consiste à examiner au moins une deuxième condition qui est validée si la qualité de l'estimation du premier angle de tangage $\theta_1(t)$ calculée au cours de la première étape, et si la qualité de l'estimation du second angle de tangage $\theta_2(t)$ calculée au cours de la deuxième étape, sont supérieures chacune à un second seuil prédéfini, et la quatrième étape est exécutée si la première condition et la deuxième condition sont validées, et la cinquième étape est exécutée si la première condition ou la deuxième condition sont invalidées. Cette caractéristique permet de conditionner l'affinage de l'angle de tangage à un seuil de qualité du premier angle de tangage et du second angle de tangage ;

- la troisième étape de comparaison consiste à examiner une troisième condition qui est validée si la différence absolue entre le premier angle de tangage $\theta_1(t)$ et un angle de calibrage $\theta_{calib}(t)$ à l'instant t courant est inférieur à la différence absolue entre le second angle de tangage $\theta_2(t)$ et ledit angle de calibrage $\theta_{calib}(t)$, ou si l'angle de calibrage $\theta_{calib}(t)$ est compris entre le premier angle de tangage $\theta_1(t)$ et le seconde angle de tangage $\theta_2(t)$, l'angle de calibrage $\theta_{calib}(t)$ étant connu à chaque instant et correspondant à la valeur nominale de l'angle d'inclinaison du capteur en l'absence de dynamique du véhicule automobile, et la quatrième étape est exécutée si lesdites conditions sont toutes validées, et a cinquième étape est exécutée si au moins l'une desdites conditions sont invalidées. Cette caractéristique permet de conditionner l'affinage de l'angle de tangage à un écart entre l'angle de calibrage et le premier angle de tangage et le second angle de tangage ;

- le procédé comprend :

  - une sixième étape de comparaison consistant à examiner une quatrième condition qui est validée si le premier angle de tangage $\theta_1(t)$ est supérieur au second angle de tangage $\theta_2(t)$ et le premier angle de tangage affiné $\theta_{1aff}(t)$ est inférieur au second angle de tangage $\theta_2(t)$, ou si le premier angle de tangage $\theta_1(t)$ est inférieur au second angle de **tangage** $\theta_2(t)$ et le premier angle de tangage affiné $\theta_{1aff}(t)$ est supérieur au second angle de tangage $\theta_2(t)$,

  - une septième étape qui est exécutée si la quatrième condition est validée et qui consiste à considérer ledit second angle de tangage $\theta_2(t)$ tel que calculé au cours de la deuxième étape comme angle de sortie,

  - une huitième étape qui est exécutée si la quatrième condition est invalidée et qui consiste à considérer ledit premier angle de tangage affiné $\theta_{1aff}(t)$ comme angle de sortie. Cette caractéristique vise à privilégier le second angle de tangage obtenu selon la seconde méthode d'estimation dans certaines conditions ;

- la première méthode d'estimation du premier angle de tangage $\theta_1(t)$ du capteur comprend au moins :

  - une première phase de calcul d'un angle de tangage du capteur estimé par intégration du mouvement relatif du capteur $\theta_{int}(t)$ à un instant t courant, par l'équation suivante :

$$\theta_{int}(t) = \theta_1(t-1) - \theta_{rel}(t)$$

avec :

  i. $\theta_1(t-1)$ le premier angle de tangage $\theta_1(t)$ du capteur à un instant précédent t-1, et

  ii. $\theta_{rel}(t)$ un angle relatif du capteur à l'instant t courant qui exprime l'angle du capteur entre ledit instant précédent t-1 et l'instant t courant, et

  - une seconde phase d'estimation du premier angle de tangage $\theta_1(t)$ du capteur, par l'équation suivante :

$$\theta_1(t) = \theta_{int}(t) + DAC(t) * \big(\theta_{calib}(t) - \theta_{int}(t)\big)$$

avec :

  i. $\theta_1(t)$ le premier angle de tangage du capteur, à l'instant t courant,

  ii. $\theta_{int}(t)$ l'angle de tangage du capteur estimé par intégration du mouvement relatif du capteur au cours de la première phase de calcul précédente, à l'instant t courant,

  iii. $DAC(t)$ le coefficient d'anti-divergence compris entre zéro et un, à l'instant t courant,

  iv. $\theta_{calib}(t)$ un angle de calibrage à l'instant t courant, qui est connu à chaque instant et qui correspond à la valeur nominale de l'angle d'inclinaison du capteur en l'absence de dynamique du véhicule automobile ;

- le coefficient d'anti-divergence $DAC(t)$ dépend en partie de l'accélération du véhicule automobile et en partie du mouvement relatif du capteur entre l'instant courant t et un instant précédent, la seconde phase d'estimation comprenant le calcul du coefficient d'anti-divergence $DAC(t)$ par l'équation suivante :

$$DAC(t) = min\big(min(DAC_{rel}(t), DAC_{\bar{a}}(t))\big)$$

avec:

- $DAC_{rel}(t)$ un coefficient d'anti-divergence relatif qui dépend du mouvement du capteur et qui est obtenu par l'équation suivante :

$$DAC_{rel}(t) = DAC_{MaxRel} * \left(1 - min\left(\int_{t-NRel}^{t} \frac{|\theta_{rel}(x)|}{\theta_{AMR}} dx, 1\right)\right)$$

avec $DAC_{MaxRel}$ une valeur maximale prédéterminée du coefficient d'anti-divergence relatif $DAC_{rel}(t)$, $Nrel$ un nombre prédéterminé correspondant à la valeur choisie du nombre d'instants précédents utilisés pour la détermination du coefficient d'anti-divergence relatif $DAC_{rel}(t)$, $\theta_{rel}(t)$ l'angle relatif du capteur à l'instant t courant, $\theta_{AMR}$ une valeur maximale empirique prédéterminée de l'angle relatif du capteur à l'instant t courant $\theta_{rel}(t)$, et

- $DAC_{\vec{a}}(t)$ un coefficient d'anti-divergence d'accélération qui dépend de l'accélération du véhicule automobile (10), et qui est obtenu par l'équation suivante :

$$DAC_{\vec{a}}(t) = DAC_{max\vec{a}} * \left(1 - min\left(\int_{t-Na}^{t} \frac{|\vec{a}(x)|}{\vec{a}_{AMR}} dx, 1\right)\right)$$

avec $DAC_{max\vec{a}}$ une valeur maximale prédéterminée du coefficient d'anti-divergence d'accélération $DAC_{\vec{a}}(t)$, $Na$ le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération du véhicule automobile à l'instant t, $\vec{a}_{AMR}$ une valeur maximale empirique prédéterminée de l'accélération $\vec{a}(t)$ du véhicule automobile,

et, au cours de la quatrième étape, le coefficient d'anti-divergence $DAC(t)$ est augmenté par augmentation de la valeur maximale prédéterminée $DAC_{MaxRel}$ du coefficient d'anti-divergence relatif $DAC_{rel}(t)$ et par augmentation de la valeur maximale prédéterminée $DAC_{max\vec{a}}$ du coefficient d'anti-divergence d'accélération $DAC_{\vec{a}}(t)$ ;

- un coefficient d'anti-divergence de pénalité $DAC_{pen}(t)$ est ajouté au coefficient d'anti-divergence $DAC(t)$ lorsque l'accélération longitudinale mesurée du véhicule automobile est en incohérence avec l'évolution du premier angle de tangage $\theta_1(t)$ du capteur ;

- le coefficient d'anti-divergence de pénalité $DAC_{pen}(t)$ est obtenu par l'équation suivante :

$$DAC_{pen}(t) = max\left(DAC_{MaxPen}(\vec{a}(t) * \theta_{int}(t)), 0\right)$$

avec $DAC_{MaxPen}$ une valeur maximale prédéterminée du coefficient d'anti-divergence de pénalité $DAC_{pen}(t)$, $\vec{a}(t)$ l'accélération longitudinale du véhicule automobile et $\theta_{int}(t)$ l'angle de tangage du capteur estimé par intégration du mouvement relatif du capteur à un instant t courant ;

- le coefficient d'anti-divergence $DAC(t)$ est obtenu par l'équation suivante :
$DAC(t) = min(min(DAC_{rel}(t), DAC_{\vec{a}}(t)) + DAC_{pen}(t), 1)$ avec $DAC_{rel}(t)$ le coefficient d'anti-divergence relatif qui dépend du mouvement du capteur, $DAC_{\vec{a}}(t)$ le coefficient d'anti-divergence d'accélération et $DAC_{pen}(t)$ le coefficient d'anti-divergence de pénalité ;

- la qualité de l'estimation du premier angle de tangage $\theta_1(t)$ dépend de la qualité de l'angle relatif $\theta_{rel}(t)$ et de la qualité de l'angle de calibrage $\theta_{calib}(t)$ ;

la deuxième méthode d'estimation du second angle de tangage $\theta_2(t)$ du capteur consiste à traiter les images acquises par le capteur pour y reconnaître, dans chaque image, la forme de lignes de marquage de la route sur laquelle le véhicule automobile circule et pour en déduire l'estimation du second angle de tangage $\theta_2(t)$ ;
la deuxième méthode d'estimation du second angle de tangage $\theta_2(t)$ du capteur consiste à :

- analyser au moins une image acquise par le capteur à un instant t pour reconnaître des lignes de marquage au sol de la route dans ladite image, et sélectionner une pluralité de points qui appartiennent aux lignes de marquage au sol,
- définir un point de fuite à la croisée desdites lignes de marquage, et
- comparer la position dudit point de fuite avec la position du centre optique du capteur pour estimer le second angle de tangage $\theta_2(t)$ du capteur ;

- la qualité de l'estimation du second angle de tangage $\theta_2(t)$ dépend du nombre de points sélectionnés appartenant aux lignes de marquage au sol et de la longueur desdites lignes de marquage visibles dans l'image acquise ;
- le premier angle de tangage $\theta_1(t)$ du capteur est un angle de tangage qui correspond à un mouvement angulaire du capteur autour d'un axe transversal globalement perpendiculaire à la trajectoire longitudinale du véhicule automobile.

La présente invention se rapporte également à un dispositif d'estimation dynamique du tangage d'un véhicule automobile au moyen d'au moins un capteur d'acquisition d'images qui est embarqué sur ledit véhicule automobile, selon la revendication 15.

[Description des dessins]

D'autres caractéristiques et avantages de l'invention ressortiront à la lecture de la description qui suit, en référence aux figures annexées, qui illustrent :

[Fig. 1] : une vue schématique d'un véhicule automobile équipé d'une cabine suspendue et d'une caméra vidéo ;
[Fig. 2] : un organigramme des étapes du procédé d'estimation dynamique du tangage du véhicule automobile selon l'invention ;
[Fig. 3] : une vue schématique du véhicule automobile de la figure 1 dans laquelle la caméra présente un premier angle de tangage de la caméra vidéo suivant une première méthode d'estimation ;
[Fig. 4] : un exemple d'évolution de l'orientation de la caméra relatif à l'angle de tangage ;
[Fig. 5] : une vue schématique d'une image capturée par la caméra représentant des ligns de marquage sur la route ;
[Fig. 6] : une vue schématique similaire à celle de la figure 3 dans laquelle est représenté le premier angle de tangage de la caméra vidéo suivant une première méthode d'estimation et le second angle de tangage de la caméra vidéo suivant une seconde méthode d'estimation.

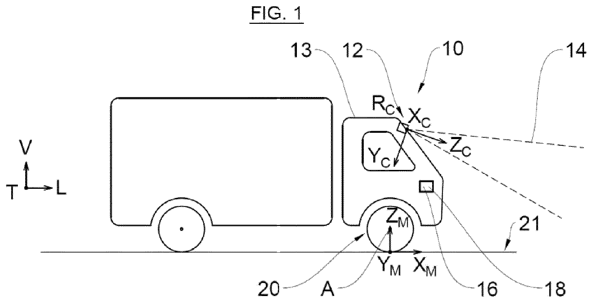

Dans les pièces de la présente demande, on adoptera à titre non limitatif la terminologie longitudinal, vertical et transversal en référence au trièdre L, V, T indiqué aux figures 1 et 3 à 6, en considérant que le véhicule automobile s'étend longitudinalement et se déplace longitudinalement vers l'avant.

Sur l'ensemble de ces figures, les éléments identiques ou similaires sont repérés par des signes de référence identiques ou similaires sur l'ensemble des figures.

[Description des modes de réalisation]

On a représenté à la figure 1 un véhicule automobile 10 du type camion qui embarque un capteur d'acquisition d'images constitué par une caméra vidéo 12.

La caméra vidéo 12 est montée sur le pare-brise avant d'une cabine 13 de conduite, par exemple au voisinage du rétroviseur central, de façon à scruter l'environnement immédiat du véhicule automobile 10, comme illustré sur la figure 1 par le champ de vision 14 de la caméra vidéo 12.

Les images numériques acquises par la caméra vidéo 12 sont transmises à une unité de traitement 16 appartenant à un système d'aide à la conduite, par exemple pour permettre au système d'aide à la conduite de détecter des objets et prendre une décision d'intervention active dans la conduite du véhicule automobile 10.

Aussi, le système d'aide à la conduite comporte un dispositif d'estimation dynamique 18 du tangage du véhicule automobile 10 qui est adapté pour mettre en œuvre un procédé d'estimation dynamique du tangage du véhicule automobile 10 au moyen de la caméra vidéo 12, selon l'invention.

On entend par tangage un angle d'inclinaison extrinsèque absolu de la caméra vidéo 12 qui correspond à un mouvement d'oscillation angulaire de la caméra vidéo 12 autour d'un axe A transversal globalement perpendiculaire à la trajectoire longitudinale du véhicule automobile 10, comme on peut le voir à la figure 1.

On a représenté à la figure 1 un premier repère tridimensionnel $R_C \{x_C, y_C, z_C\}$ qui est appelé repère caméra et qui est lié à la caméra vidéo 12, et un second repère tridimensionnel $R_M \{x_M, y_M, z_M\}$ qui est appelé repère monde. Le repère monde $R_M$ est lié au train roulant avant 20 du véhicule automobile 10 et est projeté sur la route.

De manière générale, on entend par angle de tangage un angle de rotation entre des axes du repère caméra $R_C$ et des axes du repère monde $R_M$.

On notera que dans certaines conditions, notamment dans le cas du passage d'un dos d'âne, l'angle de tangage est un angle de rotation entre des axes du repère caméra $R_C$ et des axes d'un repère gravitationnel (non représenté) c'est à dire un repère qui présente un axe vertical en référence à la gravité terrestre.

L'homme du métier appréciera que le tangage représenté ici et dont l'estimation fait l'objet de l'invention est le tangage extrinsèque, au sens défini plus haut à propos plus généralement des paramètres extrinsèques de la caméra vidéo 12.

La variation éventuelle des paramètres intrinsèques, tels que définis plus haut, ne fait pas l'objet de l'estimation décrite ci-après. En effet, ces paramètres sont calibrés et, en général, ne sont pas soumis à des variations significatives dans des échelles de temps courtes. Ils peuvent donc être considérés comme stables aux regards des phénomènes dynamiques que le procédé d'estimation selon l'invention vise à suivre, qui sont liés à des événements de conduite comme le passage sur un dos d'âne ou sur un cassis, c'est-à-dire sur une brusque dénivellation convexe ou concave dans le cas du tangage.

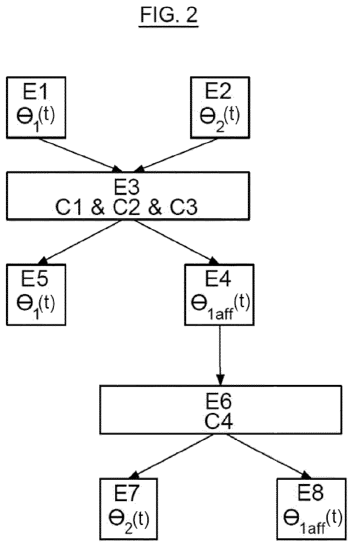

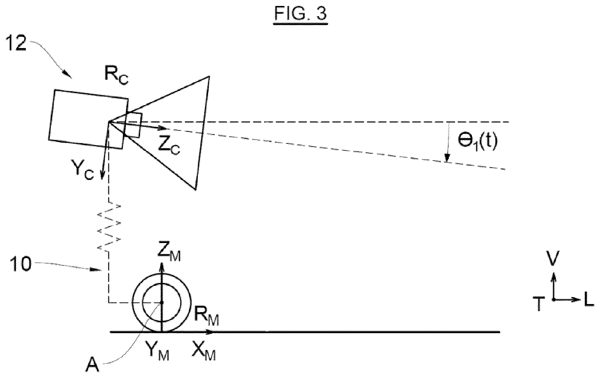

En référence à la figure 2, selon un premier mode de mise en oeuvre du procédé d'estimation dynamique du tangage du véhicule automobile 10 au moyen de la caméra vidéo 12 selon l'invention, le procédé comprend une première étape E1 d'estimation qui consiste à estimer un premier angle de tangage $\theta_1(t)$ extrinsèque absolu de la caméra vidéo 12, illustré à la figure 3, suivant une première méthode d'estimation.

La première méthode d'estimation du premier angle de tangage $\theta_1(t)$ intègre un coefficient d'anti-divergence $DAC(t)$ qui vise à limiter la divergence de l'estimation du premier angle de tangage $\theta_1(t)$.

Plus particulièrement, la première méthode d'estimation du premier angle de tangage $\theta_1(t)$ de la caméra vidéo 12 comprend une première phase de calcul d'un angle de tangage extrinsèque de la caméra vidéo 12 estimé par intégration du mouvement relatif de la caméra $\theta_{\text{int}}(t)$ à un instant t courant, par l'équation suivante :

$$\theta_{\text{int}}(t) = \theta_1(t-1) - \theta_{rel}(t)$$

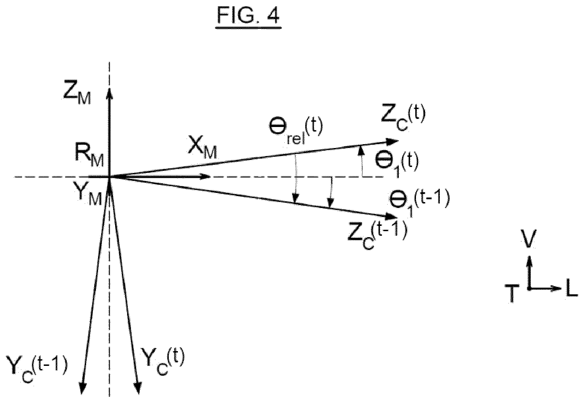

**avec, comme** on peut le voir à la figure 4, $\theta_1(t-1)$ le premier angle de tangage $\theta_1(t)$ extrinsèque absolu estimé de la caméra vidéo 12 à un instant précédent t-1, et $\theta_{rel}(t)$ un angle d'inclinaison relatif de la caméra vidéo 12 à l'instant t courant qui exprime l'angle de la caméra vidéo 12 entre l'instant précédent t-1 et l'instant t courant.

Par instant précédent, on entend par exemple l'instant de la précédente acquisition d'image par la caméra vidéo 12 dans une séquence d'acquisitions successives, ou l'instant de l'acquisition d'une image séparée d'un nombre donné d'acquisitions, nombre par exemple choisi à l'avance, dans ladite séquence, ou encore l'instant d'acquisition d'une image antérieure acquise un certain temps donné avant l'instant t.

De même, l'expression « mouvement relatif de la caméra » signifie le mouvement de la caméra entre une image capturée à un instant t et une autre image capturée à un instant précédent.

Un exemple d'évolution de l'orientation de la caméra vidéo 12 est donné à la figure 4.

De plus, la première méthode d'estimation du premier angle de tangage $\theta_1(t)$ de la caméra vidéo 12 comprend une seconde phase d'estimation du premier angle de tangage $\theta_1(t)$ de la caméra vidéo 12, par l'équation suivante :

$$\theta_1(t) = \theta_{\text{int}}(t) + DAC(t) * \left( \theta_{calib}(t) - \theta_{\text{int}}(t) \right)$$

**avec** $\theta_1(t)$ le premier angle de tangage de la caméra vidéo 12 à l'instant t courant, $\theta_{\text{int}}(t)$ l'angle de tangage de la caméra vidéo 12 estimé par intégration du mouvement relatif de la caméra au cours de la première phase de calcul précédente, à l'instant t courant, $DAC(t)$ le coefficient d'anti-divergence compris entre zéro et un, à l'instant t courant, $\theta_{calib}(t)$ un angle de calibrage extrinsèque à l'instant t courant, qui est connu à chaque instant et qui correspond à la valeur nominale de l'angle d'inclinaison de la caméra vidéo 12 en l'absence de dynamique du véhicule automobile 10.

La valeur de l'angle extrinsèque de calibrage $\theta_{calib}(t)$ en fonction du temps peut être obtenue suivant toute méthode de calibration extrinsèque connue, comme par exemple la méthode SLAM décrite précédemment.

L'angle d'inclinaison extrinsèque de calibrage $\theta_{calib}(t)$ est un angle de référence, il est également possible d'utiliser l'angle de la caméra vidéo 12 décidé pendant la conception du véhicule, ou l'angle estimé lors du calibrage en fin de chaîne de production du véhicule.

Le coefficient d'anti-divergence $DAC(t)$ évite, comme son nom l'indique, la divergence de l'estimation du premier angle de tangage $\theta_1(t)$.

En effet, le premier angle de tangage estimé $\theta_1(t)$ peut diverger de la vraie valeur par accumulation dans le temps des erreurs d'estimation de l'angle estimé par intégration du mouvement relatif de la caméra $\theta_{\text{int}}(t)$.

En l'absence du coefficient d'anti-divergence $DAC(t)$, les erreurs potentielles d'estimation de l'angle d'inclinaison relatif $\theta_{rel}(t)$ de la caméra vidéo 12 seraient sommées au fil du temps, ce qui pourrait engendrer des erreurs d'estimation du premier angle de tangage estimé $\theta_1(t)$ et, dans les cas extrêmes, des divergences importantes entre le premier angle de tangage estimé $\theta_1(t)$ et l'angle d'inclinaison réel.

Selon la valeur qui est attribuée au coefficient d'anti-divergence $DAC(t)$, le calcul de l'angle d'inclinaison $\theta(t)$ est plus ou moins restreint par l'angle de calibrage $\theta_{calib}(t)$, le coefficient d'anti-divergence $DAC(t)$ est dit plus ou moins conservatif.

Afin que l'estimation du premier angle de tangage $\theta_1(t)$ de la caméra vidéo 12 puisse prendre en compte la multitude des scenarios de la route sans pour autant diverger, le coefficient d'anti-divergence $DAC(t)$ est calculé, au cours de la seconde phase d'estimation du procédé, par l'équation suivante :

$$DAC(t) = min\left(min\left(DAC_{rel}(t), DAC_{\vec{a}}(t)\right)\right)$$

avec:

> $DAC_{rel}(t)$ un coefficient d'anti-divergence relatif qui dépend du mouvement de la caméra vidéo 12 et qui est obtenu par l'équation suivante :

$$DAC_{rel}(t) = DAC_{MaxRel} * \left(1 - min\left(\int_{t-NRel}^{t} \frac{|\theta_{rel}(x)|}{\theta AMR} dx, 1\right)\right)$$

> avec $DAC_{MaxRel}$ une valeur maximale prédéterminée du coefficient d'anti-divergence relatif $DAC_{rel}(t)$, NRel un nombre prédéterminé correspondant à la valeur choisie du nombre d'instants précédents utilisés pour la détermination du coefficient d'anti-divergence relatif $DAC_{rel}(t)$, $\theta_{rel}(t)$ l'angle relatif de la caméra vidéo 12 à l'instant t courant, $\theta AMR$ une valeur maximale empirique prédéterminée de l'angle relatif de la caméra vidéo 12 à l'instant t courant $\theta_{rel}(t)$.

Le coefficient d'anti-divergence d'accélération $DAC_{\vec{a}}(t)$ est un coefficient d'anti-divergence qui dépend de l'accélération du véhicule automobile 10, et qui est obtenu par l'équation suivante :

$$DAC_{\vec{a}}(t) = DAC_{max\vec{a}} * \left(1 - min\left(\int_{t-Na}^{t} \frac{|\vec{a}(x)|}{\vec{a}AMR} dx, 1\right)\right)$$

avec $DAC_{max\vec{a}}$ une valeur maximale prédéterminée du coefficient d'anti-divergence d'accélération $DAC_{\vec{a}}(t)$, Na le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération du véhicule automobile 10 à l'instant t, $\vec{a}AMR$ une valeur maximale empirique prédéterminée de l'accélération $\vec{a}(t)$ du véhicule automobile 10.

On notera que les paramètres $DAC_{MaxRel}$, Nrel, $\theta AMR$, $DAC_{max\vec{a}}$, Na et $\vec{a}AMR$ peuvent être modifiés pour ajuster le comportement de l'algorithme qui permet d'estimer le premier angle de tangage $\theta_1(t)$ de la caméra vidéo 12.

Avantageusement, le coefficient d'anti-divergence $DAC(t)$ dépend à la fois du mouvement de la caméra vidéo 12 entre l'instant courant t et un instant précédent t-1 avec le coefficient d'anti-divergence relatif $DAC_{rel}(t)$, et aussi de l'accélération du véhicule automobile 10 avec le coefficient d'anti-divergence d'accélération $DAC_{\vec{a}}(t)$.

En effet, lorsque le mouvement inter-image est élevé, lors du passage d'un nid de poule ou d'un coussin berlinois par exemple, le coefficient d'anti-divergence relatif $DAC_{rel}(t)$ tend vers zéro et le premier angle de tangage $\theta_1(t)$ de la caméra vidéo 12 estimé se rapproche de l'angle de la caméra vidéo 12 estimé par intégration du mouvement relatif de la caméra $\theta_{int}(t)$.

A l'inverse, lorsque le mouvement inter-image est faible, par exemple au cours d'un long freinage d'urgence ou du passage d'un rond-point, le coefficient d'anti-divergence relatif $DAC_{rel}(t)$ tend vers la valeur maximale prédéterminée $DAC_{maxrel}$ du coefficient d'anti-divergence d'accélération $DAC_{\vec{a}}(t)$ et l'estimation du premier angle de tangage $\theta_1(t)$ se rapproche de sa valeur de référence qui est l'angle de calibrage $\theta_{calib}(t)$ selon l'exemple décrit ici.

Le coefficient d'anti-divergence d'accélération $DAC_{\vec{a}}(t)$ ne dépend pas du mouvement de la caméra vidéo 12 mais de l'accélération $\vec{a}(t)$ du véhicule automobile 10.

On notera que l'accélération $\vec{a}(t)$ du véhicule automobile 10 est une accélération longitudinale suivant la trajectoire longitudinale du véhicule automobile 10.

Faire dépendre le coefficient d'anti-divergence d'accélération $DAC_{\vec{a}}(t)$ de l'accélération $\vec{a}(t)$ permet de prendre en considération les scénarios dans lesquels la cabine du véhicule automobile 10, ou plus généralement le support de la caméra vidéo 12, est incliné un temps non négligeable par une force d'inertie.

Selon une variante de mise en œuvre du premier mode de mise en œuvre du procédé selon l'invention, un coefficient d'anti-divergence de pénalité $DAC_{pen}(t)$ est ajouté au coefficient d'anti-divergence $DAC(t)$ de sorte que :

$$DAC(t) = min\left(min\left(DAC_{rel}(t), DAC_{\vec{a}}(t)\right) + DAC_{pen}(t), 1\right)$$

avec $DAC_{rel}(t)$ le coefficient d'anti-divergence relatif qui dépend du mouvement de la caméra vidéo 12, $DAC_{\vec{a}}(t)$ le coefficient d'anti-divergence d'accélération et $DAC_{pen}(t)$ le coefficient d'anti-divergence de pénalité.

Le coefficient d'anti-divergence de pénalité $DAC_{pen}(t)$ est ajouté au coefficient d'anti-divergence $DAC(t)$ lorsque l'accélération longitudinale mesurée du véhicule automobile 10 est en incohérence avec l'évolution du premier angle de tangage $\theta_1(t)$.

**En** effet, le coefficient d'anti-divergence de pénalité $DAC_{pen}(t)$ est obtenu par l'équation suivante :

$$DAC_{pen}(t) = max\big(DAC_{MaxPen}\big(\vec{a}(t) * \theta_{int}(t)\big), 0\big)$$

**avec** $DAC_{maxPen}$ une valeur maximale prédéterminée du coefficient d'anti-divergence de pénalité $DAC_{pen}(t)$, $\vec{a}(t)$ l'accélération longitudinale du véhicule automobile 10 et $\theta_{int}(t)$ l'angle de tangage de la caméra vidéo 12 estimé par intégration du mouvement relatif de la caméra décrit précédemment.

Ainsi, si l'accélération longitudinale $\vec{a}(t)$ est négative, ce qui caractérise un freinage du véhicule automobile 10, et si l'angle de tangage estimé par intégration du mouvement relatif de la caméra $\theta_{int}(t)$ est positif, ce qui correspond à un tangage vers l'avant, alors le produit $\vec{a}(t) * \theta_{int}(t)$ est négatif, et l'accélération mesurée du véhicule automobile 10 est considérée en cohérence avec l'évolution du premier angle de tangage $\theta_1(t)$, le coefficient d'anti-divergence de pénalité $DAC_{pen}(t)$ est mis à zéro et n'a donc pas d'effet.

En effet, lorsque le véhicule automobile 10 freine, le véhicule est sensé opérer un tangage vers l'avant.

A l'inverse, si le produit $\vec{a}(t) * \theta_{int}(t)$ est positif, alors l'accélération mesurée du véhicule automobile 10 est considérée en incohérence avec l'évolution du premier angle de tangage $\theta_1(t)$, et le coefficient d'anti-divergence de pénalité $DAC_{pen}(t)$ est pris en compte et il agira alors de manière à ramener la valeur du premier angle de tangage $\theta_1(t)$ sur celle de l'angle extrinsèque de calibrage $\theta_{calib}(t)$.

On notera que le coefficient d'anti-divergence de pénalité $DAC_{pen}(t)$ est saturé par la valeur maximale $DAC_{maxPen}$ pour garder un comportement cohérent.

Le procédé selon l'invention comprend une deuxième étape E2 d'estimation, qui peut être exécutée avant, après ou pendant la première étape E1 d'estimation, et qui consiste à estimer un second angle de tangage $\theta_2(t)$ de la caméra vidéo 12, suivant une seconde méthode d'estimation.

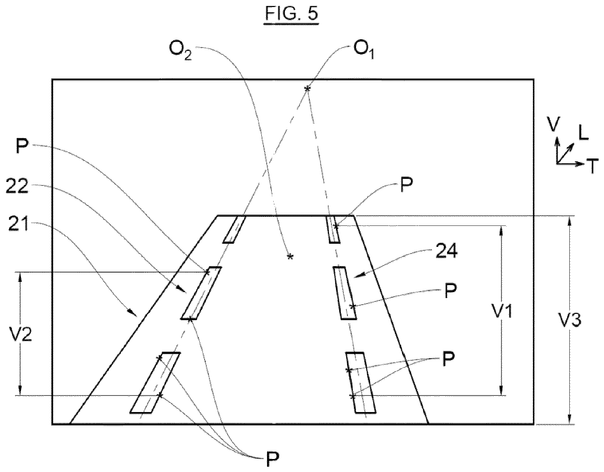

La seconde méthode d'estimation du second angle de tangage $\theta_2(t)$ de la caméra vidéo 12 consiste à traiter les images acquises par la caméra vidéo 12 pour y reconnaître, dans chaque image, la forme des lignes de marquage de la route 21 sur laquelle le véhicule automobile 10 circule, typiquement une ligne de marquage gauche 22 et ligne de marquage **droite 24** illustrées à la figure 5, et pour en déduire, en temps réel, un angle de tangage de la caméra vidéo 12.

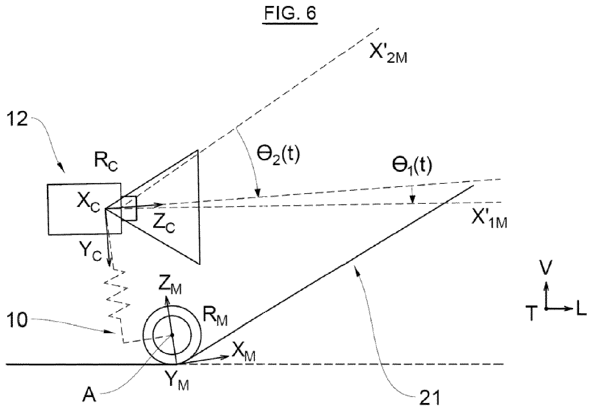

On a représenté à la figure 6 le premier angle de tangage $\theta_1(t)$ obtenu par la première méthode d'estimation et le second angle de tangage $\theta_2(t)$ obtenu par la seconde méthode d'estimation, lorsque le véhicule automobile 10, illustré par une roue, attaque la base de la pente formée par la route 21.

On notera que dans cette configuration, le second angle de tangage $\theta_2(t)$ permet d'estimer le tangage entre la caméra vidéo 12 et la route 21 en pente visible par la caméra 12, et non le tangage entre la caméra vidéo 12 et la route 21 supposée plate comme l'estime le premier angle de tangage $\theta_1(t)$ obtenu par la première méthode d'estimation.

En effet, en référence à la figure 6, le premier angle de tangage $\theta_1(t)$ est défini entre l'axe $Z_C$ de la caméra 12 et un axe fictif $X'_{1M}$ qui est globalement parallèle à la portion de route située avant la pente, et le second angle de tangage $\theta_2(t)$ est défini entre l'axe $Z_C$ de la caméra 12 et un axe fictif $X'_{2M}$ qui est globalement parallèle à la pente visible par la caméra 12.

Ce type de méthode basée sur la reconnaissance des lignes de marquage au sol est connue de l'homme du métier. Par conséquent, cette méthode ne sera décrite que succinctement ci-dessous par un exemple de mise en œuvre.

Ainsi, la seconde méthode d'estimation du second angle de tangage $\theta_2(t)$ de la caméra vidéo 12 consiste à analyser au moins une image acquise par la caméra vidéo 12 à un instant t pour reconnaître et extraire les lignes de marquage 22, 24 de la route 21 dans ladite image, et sélectionner une pluralité de points P qui appartiennent aux lignes de marquage 22, 24 extraites précédemment.

Il est supposé que l'extraction des lignes de marquage 22, 24 a été effectuée en amont de la première étape E1 du procédé selon l'invention.

A titre d'exemple, l'extraction des lignes de marquage 22, 24 peut être réalisée à l'aide d'un réseau de neurone convolutif profond. Ces lignes de marquage 22, 24 ainsi détectées dans l'image sont alors échantillonnées afin d'être considérées comme des points P appartenant aux lignes de marquage 22, 24 extraites.

Une fois les lignes de marquage 22, 24 reconnues, un point de fuite O1 est défini à la croisée des lignes de marquage 22, 24, et la position du point de fuite O1 est comparée avec la position du centre optique O2 de la caméra vidéo 12 pour estimer le second angle de tangage $\theta_2(t)$ de la caméra vidéo 12.

Le second angle de tangage $\theta_2(t)$ de la caméra vidéo 12 est alors exprimé comme l'arc-tangente de la différence de position verticale du point de fuite O1 estimé par intersection des deux lignes de marquage 22, 24 extraites et de la position verticale du centre optique O2 de la caméra vidéo 12.

A titre non limitatif, la seconde méthode d'estimation du second angle de tangage $\theta_2(t)$ de la caméra vidéo 12 décrite ici, basée sur la reconnaissance des lignes de marquage 22, 24, peut être remplacée par toute autre méthode qui adaptée pour estimer un angle de tangage de la caméra vidéo 12 et qui est complémentaire à la première méthode décrite précédemment.

Toujours selon le premier mode de mise en œuvre du procédé selon l'invention, le procédé comprend une troisième étape E3 de comparaison illustrée à la figure 2, consistant à examiner une première condition C1 qui est validée si la différence absolue entre le premier angle de tangage $\theta_1(t)$ et le second angle de tangage $\theta_2(t)$ est supérieure ou égale à un premier seuil prédéfini.

Si la première condition C1 est validée, autrement dit si la première condition est remplie, alors une quatrième étape E4 est exécutée.

A l'inverse, si la première condition C1 est invalidée, autrement dit si la première condition n'est pas remplie, alors une cinquième étape E5 est exécutée à la place de la quatrième étape E4.

La quatrième étape E4 consiste à affiner le premier angle de tangage $\theta_1(t)$ en augmentant le coefficient d'anti-divergence $DAC(t)$ pour obtenir un premier angle de tangage affiné $\theta_{1aff}(t)$ considéré comme angle de sortie.

On entend par « angle de sortie » l'angle de tangage estimé de la caméra vidéo 12 qui est donné par le procédé selon l'invention.

A cet effet, au cours de la quatrième étape E4, le coefficient d'anti-divergence $DAC(t)$ est augmenté par augmentation de la valeur maximale prédéterminée $DAC_{MaxRel}$, du coefficient d'anti-divergence relatif $DAC_{rel}(t)$ et par augmentation de la valeur maximale prédéterminée $DAC_{max\vec{a}}$ du coefficient d'anti-divergence d'accélération $DAC_{\vec{a}}(t)$.

La cinquième étape E5 consiste à considérer le premier angle de tangage $\theta_1(t)$, tel que calculé au cours de la première étape E1, comme angle de sortie.

Ainsi, selon la présente invention, le premier angle de tangage $\theta_1(t)$ estimé par la première méthode basée sur le tangage relatif de la caméra vidéo 12 est affiné avec un paramétrage plus conservatif, dans le cas où le premier angle de tangage $\theta_1(t)$ est considéré trop éloigné du second angle de tangage $\theta_2(t)$ estimé par la seconde méthode basée sur les lignes de marquage 22, 24 au sol, laquelle se révèle plus fiable en cas de changement de pente de la route 21 notamment.

Selon un deuxième mode de mise en œuvre du procédé selon l'invention, la troisième étape E3 de comparaison consiste à examiner une deuxième condition C2 qui est validée si la qualité de l'estimation du premier angle de tangage $\theta_1$ ($t$) calculée au cours de la première étape E1 d'estimation, et si la qualité de l'estimation du second angle de tangage $\theta_2(t)$ calculée au cours de la deuxième étape E2 d'estimation, sont supérieures chacune à un second seuil prédéfini.

Si la deuxième condition C2 est validée, ainsi que la première condition C1, autrement dit si les deux conditions C1, C2 sont remplies, alors la quatrième étape E4 décrite précédemment est exécutée.

A l'inverse, si l'une de la première condition C1 et de la deuxième condition C2 n'est pas remplie, alors la cinquième étape E5 décrite précédemment est exécutée à la place de la quatrième étape E4.

Selon un mode de réalisation préféré de l'invention, la qualité de l'estimation du premier angle de tangage $\theta_1(t)$ dépend de la qualité de l'angle relatif $\theta_{rel}(t)$ et de la qualité de l'angle de calibrage $\theta_{calib}(t)$.

Plus particulièrement, la qualité de l'estimation du premier angle de tangage $\theta_1(t)$ comprend une première phase de calcul de la qualité de l'angle de la caméra vidéo 12 estimé par intégration du mouvement relatif de la caméra $\theta_{int}(t)$ par l'équation suivante :

$$Qualité\theta_{int}(t) = 0{,}5 * Qualité\theta_1(t-1) + 0{,}5 * Qualité\theta_{rel}(t)$$

avec *Qualité*$\theta_1$($t$ - 1) la qualité du premier angle de tangage $\theta_1(t)$ de la caméra vidéo 12 à un instant précédent t-1, calculée à un cycle précédent, et *Qualité*$\theta_{rel}(t)$ la qualité de l'angle relatif $\theta_{rel}(t)$ de la caméra vidéo 12 à l'instant t courant.

La qualité de l'angle relatif $\theta_{rel}(t)$) est obtenu par l'équation suivante :

$$Qualité\theta_{rel}(t) = min\big(Qualité\theta_{rel}1(t); Qualité\theta_{rel}2(t)\big)$$

**avec** *Qualité*$\theta_{rel}1(t)$ = 0,8 * *QualitéDeSampson* + 0,2 * *QualitéImage*

La qualité de Sampson peut être obtenue par l'équation suivante :

$$QualitéDeSampson = \frac{DistanceDeSampsonMax - DistanceDeSampsonActuelle}{DistanceDeSampsonMax - DistanceDeSampsonMin}$$

avec *DistanceDeSampsonMax* une valeur fixe qui définit la valeur maximale de Sampson, *DistanceDeSampsonMin* une valeur fixe qui définit la valeur minimale de Sampson et *DistanceDeSampsonActuelle* la distance de Sampson calculée sur la base du modèle sélectionné pour fournir l'angle de sortie.

La qualité image peut être obtenue par l'équation suivante :

$$QualitéImage = \frac{NombreDeSegmentsConcordants}{NombreDeSegments}$$

avec *NombreDeSegments* le nombre de segments formés entre un point identifié sur une première image à instant précédent t-1 et le même point identifié sur une seconde image à instant t suivant, les images étant capturées par la caméra vidéo 12, et *NombreDeSegmentsConcordants* le nombre de segments qui présentent une cohérence entre eux et qui sont jugés fidèles au mouvement de la caméra vidéo 12, à l'inverse des segments discordants qui sont jugés incohérents.

Aussi, le terme *Qualité$\theta_{rel}$2(t)* correspond à la qualité de répartition normalisée pour être comparable au terme *Qualité$\theta_{rel}$1(t)*.

Pour calculer la qualité de répartition, l'image courante est divisée en parties égales, par exemple vingt parties égales, puis le nombre de segments est compté dans chacune des parties. On calcule le nombre de segments qu'il faudrait pour une répartition uniforme des segments avec le rapport suivant : $\frac{NombreDeSegments}{NombreDeParties}$.

Ensuite, on calcule l'erreur normalisée par rapport à une répartition uniforme pour chacune des parties par l'équation suivante :

$$erreur = \frac{\frac{NombreDeSegments}{NombreDeParties}-NombreDeSegmentDansChaquePartie}{\frac{NombreDeSegments}{NombreDeParties}}$$

La qualité de répartition est la moyenne des erreurs pour toutes les parties de l'image, tel que :

$$QualitéDeRépartition = \sum \frac{1-NombreD'erreurs}{NombreDeParties}$$

En s'appuyant sur les calculs précédents, il est possible de calculer la qualité de l'estimation du premier angle de tangage $\theta_1(t)$ avec l'équation suivante :

$$Qualité\theta_1(t) = Qualité\theta_{int}(t) + DAC(t)\big(Qualité\theta_{calib}(t) - Qualité\theta_{int}(t)\big)$$

avec le coefficient d'anti-divergence *DAC(t)* tel que défini précédemment.

La qualité de l'estimation du second angle de tangage $\theta_2(t)$, qui pour rappel est une estimation basée sur l'analyse des lignes de marquage 22, 24 au sol, dépend du nombre de points P sélectionnés appartenant aux lignes de marquage 22, 24 et de la longueur des lignes de marquage au 22, 24, par exemple.

Plus particulièrement, la qualité de l'estimation du second angle de tangage $\theta_2(t)$, peut être calculée par l'équation suivante :

$$Qualité\theta_2(t) = 0{,}5 * QualitéNombreDePoints + 0{,}5 * QualitéLongueurLigne$$

avec $QualitéNombreDePoints = min\left(1; \frac{NbrPoints}{NbrMiniPoints}\right)$ avec *NbrPoints* le nombre de points P utilisés pour l'approximation des lignes de marquage 22, 24, par exemple trois points P pour la ligne de marquage gauche 22 et quatre point P pour la ligne de marquage droite selon l'exemple illustré à la figure 5, et *NbrMiniPoints* le nombre de points P minimum pour l'approximation des lignes de marquage 22, 24, qui est un nombre prédéfini.

De plus, la qualité de longueur des lignes de marquage 22, 24 peut être déterminée par l'équation suivante :

$$QualitéLongueurLigne = \frac{QLongueurLigneD + QLongueurLigneG}{2}$$

**avec** *QLongueurLigneD* la qualité de la longueur de la ligne droite 24 qui est égale à :

$$\frac{TailleVerticaleDeLaLigneDroite}{TailleVerticaleDeLaRégionD'intérêtDeL'image}$$

et *QLongueurLigneG* la qualité de la longueur de la ligne gauche 22 qui est égale à :

$$\frac{TailleVerticaleDeLaLigneGauche}{TailleVerticaleDeLaRégionD'intérêtDeL'image}.$$

La taille verticale V1 de la ligne droite 24, la taille verticale V2 de la ligne gauche 22 et la taille verticale V3 de la région d'intérêt de l'image sont illustrées à la figure 5.

Ainsi, le deuxième mode de mise en œuvre du procédé selon l'invention autorise l'exécution de la quatrième étape E4 à condition que la qualité de l'estimation du premier angle de tangage $\theta_1(t)$ et que la qualité de l'estimation du second angle de tangage $\theta_2(t)$ sont jugées suffisantes. Pour rappel, la quatrième étape E4 vise à affiner l'angle de tangage de sortie en augmentant le coefficient d'anti-divergence *DAC(t)*.

Selon un troisième mode de mise en œuvre du procédé selon l'invention, la troisième étape E3 de comparaison consiste à examiner une troisième condition C3 qui est validée si la différence absolue entre le premier angle de tangage $\theta_1(t)$ et l'angle de calibrage $\theta_{calib}(t)$ à l'instant t courant est inférieure à la différence absolue entre le second angle de tangage $\theta_2(t)$ et l'angle de calibrage $\theta_{calib}(t)$, ou si l'angle de calibrage $\theta_{calib}(t)$, est compris entre le premier angle de tangage $\theta_1(t)$ et le seconde angle de tangage $\theta_2(t)$. L'angle de calibrage $\theta_{calib}(t)$ est celui décrit et utilisé précédemment pour la première méthode d'estimation du premier angle de tangage $\theta_1(t)$ de la caméra vidéo 12.

Si les trois conditions C1, C2, C3 sont remplies, alors la quatrième étape E4 décrite précédemment est exécutée.

A l'inverse, si l'une des trois conditions C1, C2, C3 n'est pas remplie, alors la cinquième étape E5 décrite précédemment est exécutée à la place de la quatrième étape E4.

Avantageusement, le troisième mode de mise en œuvre de l'invention permet de fournir un angle de tangage de sortie qui est compris dans l'intervalle du premier angle de tangage $\theta_1(t)$ et du second angle de tangage $\theta_2(t)$.

Autrement dit, le troisième mode de mise en œuvre de l'invention permet de ne pas être trop conservatif vers l'angle de calibrage $\theta_{calib}(t)$.

Selon un quatrième mode de mise en œuvre du procédé selon l'invention, le procédé comprend une sixième étape E6 de comparaison qui est exécutée si la quatrième étape E4 est exécutée, comme on peut le voir sur l'organigramme à la figure 2.

La sixième étape E6 consiste à examiner une quatrième condition C4 qui est validée si le premier angle de tangage $\theta_1(t)$ est supérieur au second angle de tangage $\theta_2(t)$ et si le premier angle de tangage affiné $\theta_{1aff}(t)$ est inférieur au second angle de tangage $\theta_2(t)$, ou si le premier angle de tangage $\theta_1(t)$ est inférieur au second angle de tangage $\theta_2(t)$ et si le premier angle de tangage affiné $\theta_{1aff}(t)$ est supérieur au second angle de tangage $\theta_2(t)$.

Si la quatrième condition C4 est remplie, alors une septième étape E7 est exécutée.

A l'inverse, si la quatrième condition n'est pas remplie, alors une huitième étape E8 est exécutée, à la place de la septième étape E7.

La septième étape E7 consiste à considérer ledit second angle de tangage $\theta_2(t)$, tel que calculé au cours de la deuxième étape E2 d'estimation, comme angle de sortie.

La huitième étape E8 consiste à considérer le premier angle de tangage affiné $\theta_{1aff}(t)$ comme angle de sortie.

Avantageusement, le quatrième mode de mise en oeuvre de l'invention permet de ne pas être trop, ni trop peu, conservatif vers l'angle de calibrage $\theta_{calib}(t)$.

Avantageusement, le procédé selon l'invention permet d'estimer l'angle de tangage du véhicule de manière stable dans les phases de faible mouvement de tangage de la caméra vidéo 12.

Aussi, le procédé selon l'invention est réactif dans les phases de fort mouvement de tangage de la caméra vidéo 12, notamment en phase de changement de pente.

De plus, l'angle de tangage estimé au moyen du procédé selon l'invention est rapidement de retour vers une valeur relative à la route, et non au point de départ de l'intégration, après une longue portion de route inclinée.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

**Revendications**

1. Procédé d'estimation du tangage d'un véhicule automobile (10) au moyen d'au moins un capteur (12) d'acquisition d'images qui est embarqué sur ledit véhicule automobile (10) et qui est apte à fournir des images de la route (21) sur laquelle se déplace le véhicule automobile (10), **caractérisé en ce qu'**il comprend au moins :

   - une première étape (E1) d'estimation consistant à estimer un premier angle de tangage $\theta_1(t)$ du capteur (12) suivant une première méthode d'estimation qui intègre un coefficient d'anti-divergence *DAC(t)* visant à limiter la divergence de l'estimation du premier angle de tangage $\theta_1(t)$, de sorte que, lorsque le mouvement inter-image est faible, l'estimation du premier angle de tangage $\theta_1(t)$ du capteur (12) se rapproche d'une valeur de référence et de sorte que, lorsque le mouvement inter-image est élevé, l'estimation du premier angle de tangage $\theta_1(t)$ du capteur (12) se rapproche de l'angle du capteur (12) estimé par intégration du mouvement relatif du capteur (12),

- une deuxième étape (E2) d'estimation qui consiste à estimer un second angle de tangage $\theta_2(t)$ du capteur (12), suivant une seconde méthode d'estimation permettant d'estimer le tangage entre le capteur (12) et la route (21) visible par le capteur (12),

- une troisième étape (E3) de comparaison consistant à examiner au moins une première condition (C1) qui est validée si la différence absolue entre le premier angle de tangage $\theta_1(t)$ et le second angle de tangage $\theta_2(t)$ est supérieure ou égale à un premier seuil prédéfini,

- une quatrième étape (E4) qui est exécutée si un critère est rempli, le critère comprenant au moins la validation de la première condition (C1), et qui consiste à affiner ledit premier angle de tangage $\theta_1(t)$ en augmentant le coefficient d'anti-divergence *DAC(t)* pour obtenir un premier angle de tangage affiné $\theta_{1aff}(t)$ considéré comme angle de sortie, et

- une cinquième étape (E5) qui est exécutée si la première condition (C1) est invalidée et qui consiste à considérer ledit premier angle de tangage $\theta_1(t)$ tel que calculé au cours de la première étape (E1) comme angle de sortie.

2. Procédé selon la revendication 1, **caractérisé en ce que** la troisième étape (E3) de comparaison consiste à examiner au moins une deuxième condition (C2) qui est validée si la qualité de l'estimation du premier angle de tangage $\theta_1(t)$ calculée au cours de la première étape (E1), et si la qualité de l'estimation du second angle de tangage $\theta_2(t)$ calculée au cours de la deuxième étape (E2), sont supérieures chacune à un second seuil prédéfini, et **en ce que** la quatrième étape (E4) est exécutée si un critère est rempli, le critère comprenant en outre la validation de la deuxième condition (C2), et **en ce que** la cinquième étape (E5) est exécutée si la première condition (C1) ou la deuxième condition (C2) sont invalidées.

3. Procédé selon la revendication 2, **caractérisé en ce que** la troisième étape (E3) de comparaison consiste à examiner une troisième condition (C3) qui est validée si la différence absolue entre le premier angle de tangage $\theta_1(t)$ et un angle de calibrage $\theta_{calib}(t)$ à l'instant t courant est inférieur à la différence absolue entre le second angle de tangage $\theta_2(t)$ et ledit angle de calibrage $\theta_{calip}(t)$, ou si l'angle de calibrage $\theta_{calib}(t)$ est compris entre le premier angle de tangage $\theta_1(t)$ et le seconde angle de tangage $\theta_1(t)$, l'angle de calibrage $\theta_{calib}(t)$ étant connu à chaque instant et correspondant à la valeur nominale de l'angle d'inclinaison du capteur (12) en l'absence de dynamique du véhicule automobile (10), et **en ce que** la quatrième étape (E4) est exécutée si un critère est rempli, le critère comprenant en outre la validation de la troisième condition (C3), et **en ce que** la cinquième étape (E5) est exécutée si au moins l'une desdites conditions (C1, C2, C3) sont invalidées.

4. Procédé selon l'une quelconque des revendications précédentes, **caractérisé en ce qu'**il comprend :

- une sixième étape (E6) de comparaison consistant à examiner une quatrième condition (C4) qui est validée si le premier angle de tangage $\theta_1(t)$ est supérieur au second angle de tangage $\theta_2(t)$ et le premier angle de tangage affiné $\theta_{1aff}(t)$ est inférieur au second angle de tangage $\theta_2(t)$, ou si le premier angle de tangage $\theta_1(t)$ est inférieur au second angle de tangage $\theta_2(t)$ et le premier angle de tangage affiné $\theta_{1aff}(t)$ est supérieur au second angle de tangage $\theta_2(t)$,

- une septième étape (E7) qui est exécutée si la quatrième condition (C4) est validée et qui consiste à considérer ledit second angle de tangage $\theta_2(t)$ tel que calculé au cours de la deuxième étape (E2) comme angle de sortie, et

- une huitième étape (E8) qui est exécutée si la quatrième condition (C4) est invalidée et qui consiste à considérer ledit premier angle de tangage affiné $\theta_{1aff}(t)$ comme angle de sortie.

5. Procédé selon l'une quelconque des revendications précédentes, **caractérisé en ce que** la première méthode d'estimation du premier angle de tangage $\theta_1(t)$ du capteur (12) comprend au moins :

- une première phase de calcul d'un angle de tangage du capteur (12) estimé par intégration du mouvement relatif du capteur (12) $\theta_{\text{int}}(t)$ à un instant t courant, par l'équation suivante :

$$\theta_{\text{int}}(t) = \theta_1(t-1) - \theta_{rel}(t)$$

avec :

i. $\theta_1(t-1)$ le premier angle de tangage $\theta_1(t)$ du capteur (12) à un instant précédent t-1, et
ii. $\theta_{rel}(t)$ un angle relatif du capteur (12) à l'instant t courant qui exprime l'angle du capteur (12) entre ledit instant précédent t-1 et l'instant t courant, et

- une seconde phase d'estimation du premier angle de tangage $\theta_1(t)$ du capteur (12), par l'équation suivante :

$$\theta_1(t) = \theta_{\text{int}}(t) + DAC(t) * \big(\theta_{calib}(t) - \theta_{\text{int}}(t)\big)$$

avec :

i. $\theta_1(t)$ le premier angle de tangage du capteur (12), à l'instant t courant,
ii. $\theta_{\text{int}}(t)$ l'angle de tangage du capteur (12) estimé par intégration du mouvement relatif du capteur (12) au cours de la première phase de calcul précédente, à l'instant t courant,
iii. $DAC(t)$ le coefficient d'anti-divergence compris entre zéro et un, à l'instant t courant, et
iv. $\theta_{calib}(t)$ un angle de calibrage à l'instant t courant, qui est connu à chaque instant et qui correspond à la valeur nominale de l'angle d'inclinaison du capteur (12) en l'absence de dynamique du véhicule automobile (10).

6. Procédé selon l'une quelconque des revendications précédentes, **caractérisé en ce que** le coefficient d'anti-divergence $DAC(t)$ dépend en partie de l'accélération du véhicule automobile (10) et en partie du mouvement relatif du capteur (12) entre l'instant courant t et un instant précédent, la seconde phase d'estimation comprenant le calcul du coefficient d'anti-divergence $DAC(t)$ par l'équation suivante :

$$DAC(t) = min\Big(min\big(DAC_{rel}(t), DAC_{\vec{a}}(t)\big)\Big)$$

avec :

- $DAC_{rel}(t)$ un coefficient d'anti-divergence relatif qui dépend du mouvement du capteur (12) et qui est obtenu par l'équation suivante :

$$DAC_{rel}(t) = DAC_{MaxRel} * \left(1 - min\left(\int_{t-NRel}^{t} \frac{|\theta_{rel}(x)|}{\theta AMR} dx, 1\right)\right)$$

avec $DAC_{MaxRel}$ une valeur maximale prédéterminée du coefficient d'anti-divergence relatif $DAC_{rel}(t)$, $Nrel$ un nombre prédéterminé correspondant à la valeur choisie du nombre d'instants précédents utilisés pour la détermination du coefficient d'anti-divergence relatif $DAC_{rel}(t)$, $\theta_{rel}(t)$ l'angle relatif du capteur (12) à l'instant t courant, $\theta AMR$ une valeur maximale empirique prédéterminée de l'angle relatif du capteur (12) à l'instant t courant $\theta_{rel}(t)$, et
- $DAC_{\vec{a}}(t)$ un coefficient d'anti-divergence d'accélération qui dépend de l'accélération du véhicule automobile (10), et qui est obtenu par l'équation suivante :

$$DAC_{\vec{a}}(t) = DAC_{max\vec{a}} * \left(1 - min\left(\int_{t-Na}^{t} \frac{|\vec{a}(x)|}{\vec{a}AMR} dx, 1\right)\right)$$

avec $DAC_{max\vec{a}}$ une valeur maximale prédéterminée du coefficient d'anti-divergence d'accélération $DAC_{\vec{a}}(t)$, $Na$ le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération du véhicule automobile (10) à l'instant t, $\vec{a}AMR$ une valeur maximale empirique prédéterminée de l'accélération $\vec{a}(t)$ du véhicule automobile (10),

et **en ce que**, au cours de la quatrième étape (E4), le coefficient d'anti-divergence $DAC(t)$ est augmenté par augmentation de la valeur maximale prédéterminée $DAC_{MaxRel}$ du coefficient d'anti-divergence relatif $DAC_{rel}(t)$ et par augmentation de la valeur maximale prédéterminée $DAC_{max\vec{a}}$ du coefficient d'anti-divergence d'accélération $DAC_{\vec{a}}(t)$.

7. Procédé selon l'une quelconque des revendications précédentes, **caractérisé en ce qu'**un coefficient d'anti-divergence de pénalité $DAC_{pen}(t)$ est ajouté au coefficient d'anti-divergence $DAC(t)$ lorsque l'accélération longitudinale mesurée du véhicule automobile (10) est en incohérence avec l'évolution du premier angle de tangage $\theta_1(t)$ du capteur (12).

8. Procédé selon la revendication 7, **caractérisé en ce que** le coefficient d'anti-divergence de pénalité $DAC_{pen}(t)$ est obtenu par l'équation suivante :
$DAC_{pen}(t) = max(DAC_{Maxpen}(\vec{a}(t) * \theta_{int}(t)), 0)$ avec $DAC_{MaxPen}$ une valeur maximale prédéterminée du coefficient d'anti-divergence de pénalité $DAC_{pen}(t)$, $\vec{a}(t)$ l'accélération longitudinale du véhicule automobile (10) et $\theta_{int}(t)$ l'angle de tangage du capteur (12) estimé par intégration du mouvement relatif du capteur (12) à un instant t courant.

9. Procédé selon les revendications 6, 7 et 8, **caractérisé en ce que** le coefficient d'anti-divergence DAC(t) est obtenu par l'équation suivante :

$$DAC(t) = min\big(min\big(DAC_{rel}(t), DAC_{\vec{a}}(t)\big) + DAC_{pen}(t), 1\big)$$

avec $DAC_{rel}(t)$ le coefficient d'anti-divergence relatif qui dépend du mouvement du capteur (12), $DAC_{\vec{a}}(t)$ le coefficient d'anti-divergence d'accélération et $DAC_{pen}(t)$ le coefficient d'anti-divergence de pénalité.

10. Procédé selon la revendication 5, **caractérisé en ce que** la qualité de l'estimation du premier angle de tangage $\theta_1(t)$ dépend de la qualité de l'angle relatif $\theta_{rel}(t)$ et de la qualité de l'angle de calibrage $\theta_{calib}(t)$.

11. Procédé selon l'une quelconque des revendications précédentes, **caractérisé en ce que** la deuxième méthode d'estimation du second angle de tangage $\theta_2(t)$ du capteur (12) consiste à traiter les images acquises par le capteur (12) pour y reconnaître, dans chaque image, la forme de lignes de marquage (22, 24) de la route (21) sur laquelle le véhicule automobile (10) circule et pour en déduire l'estimation du second angle de tangage $\theta_2(t)$.

12. Procédé selon la revendication 11, **caractérisé en ce que** la deuxième méthode d'estimation du second angle de tangage $\theta_2(t)$ du capteur (12) consiste à :

- analyser au moins une image acquise par le capteur (12) à un instant t pour reconnaître des lignes de marquage (22, 24) au sol de la route (21) dans ladite image, et sélectionner une pluralité de points (P) qui appartiennent aux lignes de marquage (22, 24) au sol,
- définir un point de fuite (O1) à la croisée desdites lignes de marquage (22, 24), et
- comparer la position dudit point de fuite (O1) avec la position du centre optique (O2) du capteur (12) pour estimer le second angle de tangage $\theta_2(t)$ du capteur (12).

13. Procédé selon la revendication 12, **caractérisé en ce que** la qualité de l'estimation du second angle de tangage $\theta_2(t)$ dépend du nombre de points (P) sélectionnés appartenant aux lignes de marquage (22, 24) au sol et de la longueur desdites lignes de marquage (22, 24) visibles dans l'image acquise.

14. Procédé selon l'une quelconque des revendications précédentes, **caractérisé en ce que** le premier angle de tangage $\theta_1(t)$ du capteur (12) est un angle de tangage qui correspond à un mouvement angulaire du capteur (12) autour d'un axe (A) transversal globalement perpendiculaire à la trajectoire longitudinale du véhicule automobile (10).

15. Dispositif d'estimation dynamique (18) du tangage d'un véhicule automobile (10) au moyen d'au moins un capteur (12) d'acquisition d'images qui est embarqué sur ledit véhicule automobile (10), prévu pour mettre en œuvre le procédé selon l'une quelconque des revendications précédentes, ledit dispositif comportant au moins un capteur (12) d'acquisition d'images qui est monté sur ledit véhicule (10) et une unité de traitement (16) pour déterminer le premier angle de tangage $\theta_1(t)$ et le second angle de tangage $\theta_2(t)$ du capteur (12).

**Patentansprüche**

1. Verfahren zur Schätzung der Nickbewegung eines Kraftfahrzeugs (10) mittels mindestens eines auf dem genannten Kraftfahrzeug (10) angebrachten Bilderfassungssensors (12), der in der Lage ist, Bilder der Straße (21), auf der sich das Kraftfahrzeug (10) bewegt, bereitzustellen, **dadurch gekennzeichnet, dass** es mindestens Folgendes umfasst:

- ein erster Schätzungsschritt (E1), der darin besteht, einen ersten Nickwinkel $\theta_1(t)$ des Sensors (12) anhand einer ersten Schätzmethode zu schätzen, die einen Anti-Divergenz-Koeffizienten *DAC(t)* einbezieht, der darauf abzielt, die Divergenz der Schätzung des ersten Nickwinkels $\theta_1(t)$ zu begrenzen, sodass, wenn die Bild-zu-Bild-Bewegung gering ist, die Schätzung des ersten Nickwinkels $\theta_1(t)$ des Sensors (12) sich einem Referenzwert annähert, und sodass, wenn die Bild-zu-Bild-Bewegung hoch ist, die Schätzung des ersten Nickwinkels $\theta_1(t)$ des Sensors (12) sich dem durch Integration der relativen Bewegung des Sensors (12) geschätzten Winkel des Sensors (12) annähert,
- ein zweiter Schätzungsschritt (E2), der darin besteht, einen zweiten Nickwinkel $\theta_2(f)$ des Sensors (12) anhand einer zweiten Schätzmethode zu schätzen, die eine Schätzung der Nickbewegung zwischen dem Sensor (12) und der vom Sensor (12) sichtbaren Straße (21) ermöglicht,
- ein dritter Vergleichsschritt (E3), der darin besteht, mindestens eine erste Bedingung (C1) zu prüfen, die erfüllt ist, wenn die absolute Differenz zwischen dem ersten Nickwinkel $\theta_1(t)$ und dem zweiten Nickwinkel $\theta_2(f)$ größer oder gleich einem vordefinierten ersten Schwellenwert ist,
- ein vierter Schritt (E4), der ausgeführt wird, wenn ein Kriterium erfüllt ist, wobei das Kriterium mindestens die Erfüllung der ersten Bedingung (C1) umfasst, und der darin besteht, den genannten ersten Nickwinkel $\theta_1(t)$ zu verfeinern, indem der Anti-Divergenz-Koeffizient *DAC(t)* erhöht wird, um einen verfeinerten ersten Nickwinkel $\theta_{1aff}(t)$ zu erhalten, der als Ausgangswinkel betrachtet wird, und
- ein fünfter Schritt (E5), der ausgeführt wird, wenn die erste Bedingung (C1) nicht erfüllt ist, und der darin besteht, den genannten ersten Nickwinkel $\theta_1(t)$, wie er im ersten Schritt (E1) berechnet wurde, als Ausgangswinkel zu betrachten.

2. Verfahren nach Anspruch 1, **dadurch gekennzeichnet, dass** der dritte Vergleichsschritt (E3) darin besteht, mindestens eine zweite Bedingung (C2) zu prüfen, die erfüllt ist, wenn die Qualität der Schätzung des ersten Nickwinkels $\theta_1(t)$, berechnet im ersten Schritt (E1), und die Qualität der Schätzung des zweiten Nickwinkels $\theta_2(t)$, berechnet im zweiten Schritt (E2), jeweils größer als ein vordefinierter zweiter Schwellenwert sind, und dass der vierte Schritt (E4) ausgeführt wird, wenn ein Kriterium erfüllt ist, wobei das Kriterium zusätzlich die Erfüllung der zweiten Bedingung (C2) umfasst, und dass der fünfte Schritt (E5) ausgeführt wird, wenn die erste Bedingung (C1) oder die zweite Bedingung (C2) nicht erfüllt sind.

3. Verfahren nach Anspruch 2, **dadurch gekennzeichnet, dass** der dritte Vergleichsschritt (E3) darin besteht, eine dritte Bedingung (C3) zu prüfen, die erfüllt ist, wenn die absolute Differenz zwischen dem ersten Nickwinkel $\theta_1(t)$ und einem Kalibrierwinkel $\theta_{calib}(t)$ zum aktuellen Zeitpunkt t kleiner ist als die absolute Differenz zwischen dem zweiten Nickwinkel $\theta_2(f)$ und dem genannten Kalibrierwinkel $\theta_{calib}(t)$, oder wenn der Kalibrierwinkel $\theta_{calib}(t)$ zwischen dem ersten Nickwinkel $\theta_1(t)$ und dem zweiten Nickwinkel $\theta_1(t)$ liegt, wobei der Kalibrierwinkel $\theta_{calib}(t)$ zu jedem Zeitpunkt bekannt ist und dem Nennwert des Neigungswinkels des Sensors (12) bei Abwesenheit von Fahrzeugdynamik des Kraftfahrzeugs (10) entspricht, und dass der vierte Schritt (E4) ausgeführt wird, wenn ein Kriterium erfüllt ist, wobei das Kriterium zusätzlich die Erfüllung der dritten Bedingung (C3) umfasst, und dass der fünfte Schritt (E5) ausgeführt wird, wenn mindestens eine der genannten Bedingungen (C1, C2, C3) nicht erfüllt ist.

4. Verfahren nach einem der vorhergehenden Ansprüche, **dadurch gekennzeichnet, dass** es Folgendes umfasst:

   - ein sechster Vergleichsschritt (E6), der darin besteht, eine vierte Bedingung (C4) zu prüfen, die erfüllt ist, wenn der erste Nickwinkel $\theta_1(t)$ größer ist als der zweite Nickwinkel $\theta_2(f)$ und der verfeinerte erste Nickwinkel $\theta_{1aff}(t)$ kleiner ist als der zweite Nickwinkel $\theta_2(t)$, oder wenn der erste Nickwinkel $\theta_1(t)$ kleiner ist als der zweite Nickwinkel $\theta_2(f)$ und der verfeinerte erste Nickwinkel $\theta_{1aff}(t)$ größer ist als der zweite Nickwinkel $\theta_2(t)$,
   - ein siebter Schritt (E7), der ausgeführt wird, wenn die vierte Bedingung (C4) erfüllt ist, und der darin besteht, den genannten zweiten Nickwinkel $\theta_2(f)$ wie er im zweiten Schritt (E2) berechnet wurde, als Ausgangswinkel zu betrachten, und
   - ein achter Schritt (E8), der ausgeführt wird, wenn die vierte Bedingung (C4) nicht erfüllt ist, und der darin besteht, den genannten verfeinerten ersten Nickwinkel $\theta_{1aff}(t)$ als Ausgangswinkel zu betrachten.

5. Verfahren nach einem der vorhergehenden Ansprüche, **dadurch gekennzeichnet, dass** die erste Schätzmethode des ersten Nickwinkels $\theta_1(t)$ des Sensors (12) mindestens Folgendes umfasst:

   - eine erste Berechnungsphase eines Nickwinkels des Sensors (12), geschätzt durch Integration der relativen Bewegung des Sensors (12) $\theta_{int}(t)$ zu einem aktuellen Zeitpunkt t, nach folgender Gleichung:

$$\theta_{\text{int}}(t) = \theta_1(t-1) - \theta_{rel}(t),$$

wobei:

i. $\theta_1(t-1)$ der erste Nickwinkel $\theta_1(t)$ des Sensors (12) zu einem vorherigen Zeitpunkt t-1 ist, und
ii. $\theta_{rel}(t)$ der relative Winkel des Sensors (12) zum aktuellen Zeitpunkt t ist, der den Winkel des Sensors (12) zwischen dem genannten vorherigen Zeitpunkt t-1 und dem aktuellen Zeitpunkt t ausdrückt, und

- eine zweite Schätzphase des ersten Nickwinkels $\theta_1(t)$ des Sensors (12), nach folgender Gleichung:

$$\theta_1(t) = \theta_{\text{int}}(t) + DAC(t) * (\theta_{calib}(t) - \theta_{\text{int}}(t)),$$

wobei:

i. $\theta_1(t)$ der erste Nickwinkel des Sensors (12) zum aktuellen Zeitpunkt t ist,
ii. $\theta_{\text{int}}(t)$ der Nickwinkel des Sensors (12), geschätzt durch Integration der relativen Bewegung des Sensors (12) während der vorhergehenden ersten Berechnungsphase, zum aktuellen Zeitpunkt t ist,
iii. $DAC(t)$ der Anti-Divergenz-Koeffizient, der zwischen null und eins liegt, zum aktuellen Zeitpunkt t ist, und
iv. $\theta_{calib}(t)$ der Kalibrierungswinkel zum aktuellen Zeitpunkt t ist, der zu jedem Zeitpunkt bekannt ist und dem Nennwert des Neigungswinkels des Sensors (12) bei Abwesenheit der Dynamik des Kraftfahrzeugs (10) entspricht.

6. Verfahren nach einem der vorhergehenden Ansprüche, **dadurch gekennzeichnet, dass** der Anti-Divergenz-Koeffizient $DAC(t)$ teilweise von der Beschleunigung des Kraftfahrzeugs (10) und teilweise von der relativen Bewegung des Sensors (12) zwischen dem aktuellen Zeitpunkt t und einem vorhergehenden Zeitpunkt abhängt, wobei die zweite Schätzphase die Berechnung des Anti-Divergenz-Koeffizienten $DAC(t)$ nach folgender Gleichung umfasst:

$$DAC(t) = min\big(min(DAC_{rel}(t), DAC_{\vec{a}}(t))\big),$$

wobei:

- $DAC_{rel}(t)$ der relative Anti-Divergenz-Koeffizient ist, der von der Bewegung des Sensors (12) abhängt und der nach folgender Gleichung bestimmt wird:

$$DAC_{rel}(t) = DAC_{MaxRel} * \left(1 - min\left(\int_{t-NRel}^{t} \frac{|\theta_{rel}(x)|}{\theta AMR} dx, 1\right)\right),$$

wobei $DAC_{MaxRel}$ der vordefinierte Maximalwert des relativen Anti-Divergenz-Koeffizienten $DAC_{rel}(t)$ ist, $Nrel$ der vordefinierte Zahl ist, die dem gewählten Wert der Anzahl vorheriger Zeitpunkte entspricht, die für die Bestimmung des relativen Anti-Divergenz-Koeffizienten $DAC_{rel}(t)$ verwendet werden, $\theta_{rel}(t)$ der relative Winkel des Sensors (12) zum aktuellen Zeitpunkt t ist, $\theta AMR$ der vordefinierte empirische Maximalwert des relativen Winkels des Sensors (12) zum aktuellen Zeitpunkt $\theta_{rel}(t)$ ist, und
- $DAC_{\vec{a}}(t)$, ein Beschleunigungs-Anti-Divergenz-Koeffizient ist, der von der Beschleunigung des Kraftfahrzeugs (10) abhängt und der nach folgender Gleichung bestimmt wird:

$$DAC_{\vec{a}}(t) = DAC_{max\vec{a}} * \left(1 - min\left(\int_{t-Na}^{t} \frac{|\vec{a}(x)|}{\vec{a} AMR} dx, 1\right)\right)$$

wobei $DAC_{max\vec{a}}$ ein vordefinierter Maximalwert des Beschleunigungs-Anti-Divergenz-Koeffizienten $DAC_{\vec{a}}(t)$ ist, $Na$ die vordefinierte Zahl ist, die dem gewählten Wert der Anzahl vorheriger Zeitpunkte entspricht, die für die Bestimmung des Beschleunigungs-Anti-Divergenz-Koeffizienten verwendet werden $DAC_{\vec{a}}(t)$, $\vec{a}(t)$ die Beschleunigung des Kraftfahrzeugs (10) zum Zeitpunkt t ist, $\vec{a} AMR$ der vordefinierte empirische Maximalwert der Beschleunigung $\vec{a}(t)$ des Kraftfahrzeugs (10) ist,

und dass während des vierten Schritts (E4) der Anti-Divergenz-Koeffizient $DAC(t)$ durch Erhöhung des vordefinierten Maximalwerts $DAC_{MaxRel}$ des relativen Anti-Divergenz-Koeffizienten $DAC_{rel}(t)$ und durch Erhöhung des vordefinierten Maximalwerts $DAC_{max\vec{a}}$ des Beschleunigungs-Anti-Divergenz-Koeffizienten $DAC_{\vec{a}}(t)$ erhöht wird.

7. Verfahren nach einem der vorhergehenden Ansprüche, **dadurch gekennzeichnet, dass** ein Straf-Anti-Divergenz-Koeffizient $DAC_{pen}(t)$ zum Anti-Divergenz-Koeffizienten $DAC(t)$ addiert wird, wenn die gemessene longitudinale Beschleunigung des Kraftfahrzeugs (10) nicht mit der Entwicklung des ersten Nickwinkels $\theta_1(t)$ des Sensors (12) übereinstimmt.

8. Verfahren nach Anspruch 7, **dadurch gekennzeichnet, dass** der Straf-Anti-Divergenz-Koeffizient $DAC_{pen}(t)$ nach folgender Gleichung bestimmt wird: $DAC_{pen}(t) = max(DAC_{MaxPen}(\vec{a}(t) * \theta_{int}(t)), 0)$ wobei $DAC_{MaxPen}$ der vordefinierte Maximalwert des Straf-Anti-Divergenz-Koeffizienten ist, $DAC_{pen}(t)$, $\vec{a}(t)$ die longitudinale Beschleunigung des Kraftfahrzeugs (10) ist und $\theta_{int}(t)$ der Nickwinkel des Sensors (12) ist, geschätzt durch Integration der relativen Bewegung des Sensors (12) zum aktuellen Zeitpunkt t.

9. Verfahren nach den Ansprüchen 6, 7 und 8, **dadurch gekennzeichnet, dass** der Anti-Divergenz-Koeffizient DAC(t) nach folgender Gleichung bestimmt wird: $DAC(t) = min(min(DAC_{rel}(t), DAC_{\vec{a}}(t)) + DAC_{pen}(t), 1)$, wobei $DAC_{rel}(t)$ der relative Anti-Divergenz-Koeffizient ist, der von der Bewegung des Sensors (12) abhängt, $DAC_{\vec{a}}(t)$ der Beschleunigungs-Anti-Divergenz-Koeffizient ist und $DAC_{pen}(t)$ der Straf-Anti-Divergenz-Koeffizient ist.

10. Verfahren nach Anspruch 5, **dadurch gekennzeichnet, dass** die Qualität der Schätzung des ersten Nickwinkels $\theta_1(t)$ von der Qualität des relativen Winkels $\theta_{rel}(t)$ und von der Qualität des Kalibrierwinkels $\theta_{calib}(t)$ abhängt.

11. Verfahren nach einem der vorhergehenden Ansprüche, **dadurch gekennzeichnet, dass** die zweite Schätzmethode des zweiten Neigungswinkels $\theta_2(f)$ des Sensors (12) darin besteht, die vom Sensor (12) aufgenommenen Bilder so zu verarbeiten, dass in jedem Bild die Form der Fahrbahnmarkierungslinien (22, 24) der Straße (21), auf der das Kraftfahrzeug (10) fährt, erkannt und daraus die Schätzung des zweiten Neigungswinkels $\theta_2(f)$ abgeleitet wird.

12. Verfahren nach Anspruch 11, **dadurch gekennzeichnet, dass** die zweite Schätzmethode des zweiten Nickwinkels $\theta_2(f)$ des Sensors (12) aus Folgendem besteht:

   - Analyse mindestens eines vom Sensor (12) zu einem Zeitpunkt t aufgenommenen Bildes zur Erkennung von Markierungslinien (22, 24) auf der Fahrbahn (21) in diesem Bild und Auswahl einer Mehrzahl von Punkten (P), die zu den Markierungslinien (22, 24) auf der Fahrbahn gehören,
   - Bestimmung eines Fluchtpunkts (O1) an der Kreuzung der genannten Markierungslinien (22, 24), und
   - Vergleich der Position des genannten Fluchtpunkts (O1) mit der Position des optischen Zentrums (O2) des Sensors (12) zur Schätzung des zweiten Nickwinkels $\theta_2(f)$ des Sensors (12).

13. Verfahren nach Anspruch 12, **dadurch gekennzeichnet, dass** die Qualität der Schätzung des zweiten Nickwinkels $\theta_2(t)$ von der Anzahl der ausgewählten Punkte (P), die zu den Markierungslinien (22, 24) auf der Fahrbahn gehören, und von der Länge der genannten Markierungslinien (22, 24), die im aufgenommenen Bild sichtbar sind, abhängt.

14. Verfahren nach einem der vorhergehenden Ansprüche, **dadurch gekennzeichnet, dass** der erste Nickwinkel $\theta_1(t)$ des Sensors (12) ein Nickwinkel ist, der einer Winkelbewegung des Sensors (12) um eine Querachse (A) entspricht, die global senkrecht zur Längstrajektorie des Kraftfahrzeugs (10) steht.

15. Gerät zur dynamischen Schätzung (18) der Nickbewegung eines Kraftfahrzeugs (10) mittels mindestens eines Bildaufnahmesensors (12), der auf dem genannten Kraftfahrzeug (10) angeordnet ist, vorgesehen zur Durchführung des Verfahrens nach einem der vorhergehenden Ansprüche, wobei das genannte Gerät mindestens einen Bildaufnahmesensor (12), der auf dem genannten Fahrzeug (10) montiert ist, und eine Verarbeitungseinheit (16) zur Bestimmung des ersten Nickwinkels $\theta_1(t)$ und des zweiten Nickwinkels $\theta_2(t)$ des Sensors (12) aufweist.

**Claims**

1. A method for estimating the pitch of a motor vehicle (10) by means of at least one image acquisition sensor (12) which is on board said motor vehicle (10) and which is able to provide images of the route (21) on which the motor vehicle (10) is moving, **characterised in that** it comprises at least:

- a first estimation step (E1) consisting of estimating a first pitch angle $\theta_1(t)$ of the sensor (12) following a first estimation method which integrates an anti-divergence coefficient $DAC(t)$ aimed at limiting the divergence of the estimation of the first pitch angle $\theta_1(t)$, so that, when the inter-image movement is small, the estimation of the first pitch angle $\theta_1(t)$ of the sensor (12) approaches a reference value and so that, when the inter-image movement is large, the estimation of the first pitch angle $\theta_1(t)$ of the sensor (12) approaches the angle of the sensor (12) estimated by integrating the relative movement of the sensor (12),

- a second estimation step (E2) which consists of estimating a second pitch angle $\theta_2(t)$ of the sensor (12), according to a second estimation method for estimating the pitch between the sensor (12) and the route (21) visible to the sensor (12),

- a third comparison step (E3) consisting of examining at least one first condition (C1), which is validated if the absolute difference between the first pitch angle $\theta_1(t)$ and the second pitch angle $\theta_2(t)$ is greater than or equal to a predefined first threshold,

- a fourth step (E4) which is performed if a criterion is fulfilled, the criterion comprising at least the validation of the first condition (C1), and which consists of refining said first pitch angle $\theta_1(t)$ by increasing the anti-divergence coefficient DAC(t) to obtain a refined first pitch angle $\theta_{1aff}(t)$ considered as the output angle, and

- a fifth step (E5), which is performed if the first condition (C1) is invalidated, and which consists of considering said first pitch angle $\theta_1(t)$ as calculated during the first step (E1) as the output angle.

2. The method according to claim 1, **characterised in that** the third comparison step (E3) consists of examining at least one second condition (C2) which is validated if the quality of the estimation of the first pitch angle $\theta_1(t)$ calculated in the first step (E1), and if the quality of the estimation of the second pitch angle $\theta_2(t)$ calculated in the second step (E2), are each greater than a second predefined threshold, and **in that** the fourth step (E4) is executed if a criterion is met, the criterion further comprising validation of the second condition (C2), and **in that** the fifth step (E5) is executed if the first condition (C1) or the second condition (C2) are invalidated.

3. The method according to claim 2, **characterised in that** the third comparison step (E3) consists of examining a third condition (C3) which is validated if the absolute difference between the first pitch angle $\theta_1(t)$ and a calibration angle $c_{alif}(t)$ at the current time t is less than the absolute difference between the second pitch angle $\theta_2(t)$ and said calibration angle $\theta_{calib}(t)$, or if the calibration angle $\theta_{calib}(t)$ is between the first pitch angle $\theta_1(t)$ and the second pitch angle $\theta_1(t)$, the calibration angle $\theta_{calib}(t)$ being known at each instant and corresponding to the nominal value of the inclination angle of the sensor (12) in the absence of dynamics of the motor vehicle (10), and **in that** the fourth step (E4) is performed if a criterion is met, the criterion further comprising validation of the third condition (C3), and **in that** the fifth step (E5) is performed, if at least one of said conditions (C1, C2, C3) is invalidated.

4. The method according to any of the preceding claims, **characterised in that** it comprises:

- a sixth comparison step (E6) consisting of examining a fourth condition (C4) which is validated if the first pitch angle $\theta_1(t)$ is greater than the second pitch angle $\theta_2(t)$ and the first refined pitch angle $\theta_{1aff}(t)$ is less than the second pitch angle $\theta_2(t)$, or if the first pitch angle $\theta_1(t)$ is less than the second pitch angle $\theta_2(t)$ and the first refined pitch angle $\theta_{1aff}(t)$ is greater than the second pitch angle $\theta_2(t)$,

- a seventh step (E7) which is performed if the fourth condition (C4) is validated and which consists of considering the said second pitch angle $\theta_2(t)$ as calculated during the second step (E2) as the output angle, and

- an eighth step (E8) which is performed if the fourth condition (C4) is invalidated and which consists of considering the said refined first pitch angle $\theta_{1aff}(t)$ as the output angle.

5. The method according to any of the preceding claims, **characterised in that** the first method of estimating the first pitch angle $\theta_1(t)$ of the sensor (12) comprises at least:

- a first phase of calculating a pitch angle of the sensor (12) estimated by integrating the relative movement of the sensor (12) $\theta_{int}(t)$ at a t current time, using the following equation:

$$\theta_{int}(t) = \theta_1(t-1) - \theta_{rel}(t)$$

with:

i. $\theta_1(t-1)$ the first pitch angle $\theta_1(t)$ of the sensor (12) at a previous time t-1, and

ii. $\theta_{rel}(t)$ a relative angle of the sensor (12) at the current time t, which expresses the angle of the sensor (12) between the previous time t-1 and the current time t, and

- a second phase of estimating the first pitch angle θ1(t) of the sensor (12), using the following equation:

$$\theta_1(t) = \theta_{\text{int}}(t) + DAC(t) * (\theta_{calib}(t) - \theta_{\text{int}}(t))$$

with:

      i. $\theta_1(t)$ the first pitch angle of the sensor (12) at the current time t,
      ii. $\theta_{\text{int}}(t)$ the pitch angle of the sensor (12) estimated by integrating the relative movement of the sensor (12) during the previous first calculation phase, at the current time t,
      iii. $DAC(t)$ the anti-divergence coefficient between zero and one, at the current time t, and
      iv. $\theta_{calib}(t)$ a calibration angle at the current time t, which is known at each moment and corresponds to the nominal value of the angle of inclination of the sensor (12) in the absence of vehicle dynamics (10).

6. The method according to any of the preceding claims, **characterised in that** the anti-divergence coefficient $DAC(t)$ depends in part on the acceleration of the motor vehicle (10) and in part on the relative movement of the sensor (12) between the current time t and a previous time, the second estimation phase comprising the calculation of the anti-divergence coefficient $DAC(t)$ by the following equation:

$$DAC(t) = min\big(min(DAC_{rel}(t), DAC_{\vec{a}}(t))\big)^{\text{'}}$$

with:

- $DAC_{rel}(t)$ a relative anti-divergence coefficient that depends on the movement of the sensor (12) and is obtained by the following equation:

$$DAC_{rel}(t) = DAC_{MaxRel} * \left(1 - min\left(\int_{t-NRel}^{t} \frac{|\theta_{rel}(x)|}{\theta AMR} dx, 1\right)\right)$$

where $DAC_{MaxRel}$ is a predetermined maximum value of the relative anti-divergence coefficient $DAC_{rel}(t)$, Nrel is a predetermined number corresponding to the selected value of the number of previous instants used to determine the relative anti-divergence coefficient $DAC_{rel}(t)$, $\theta_{rel}(t)$ the relative angle of the sensor (12) at the current time t, $\theta AMR$ a predetermined empirical maximum value of the relative angle of the sensor (12) at the current time t $\theta_{rel}(t)$, and
- $DAC_{\vec{a}}(t)$ an acceleration anti-divergence coefficient that depends on the acceleration of the motor vehicle (10), and which is obtained by the following equation:

$$DAC_{\vec{a}}(t) = DAC_{max\vec{a}} * \left(1 - min\left(\int_{t-Na}^{t} \frac{|\vec{a}(x)|}{\vec{a}AMR} dx, 1\right)\right)$$

with $DAC_{max\vec{a}}$ a predetermined maximum value of the acceleration anti-divergence coefficient $DAC_{\vec{a}}(t)$, Na, the predetermined number corresponding to the selected value of the number of previous instants used to determine the acceleration anti-divergence coefficient $DAC_{\vec{a}}(t)$, $\vec{a}(t)$ the acceleration of the motor vehicle (10) at instant t, $\vec{a}AMR$ a predetermined empirical maximum value of the acceleration $\vec{a}(t)$ of the motor vehicle (10),

and **in that**, during the fourth step (E4), the anti-divergence coefficient $DAC(t)$ is increased by increasing the predetermined maximum value $DAC_{MaxRel}$ of the relative anti-divergence coefficient $DAC_{rel}(t)$, and by increasing the predetermined maximum value $DAC_{max\vec{a}}$ of the acceleration anti-divergence coefficient $DAC_{\vec{a}}(t)$.

7. The method according to any of the preceding claims, **characterised in that** a penalty anti-divergence coefficient $DAC_{pen}(t)$ is added to the anti-divergence coefficient $DAC(t)$ when the measured longitudinal acceleration of the motor vehicle (10) is inconsistent with the evolution of the first pitch angle $\theta_1(t)$ of the sensor (12).

8. The method according to claim 7, **characterised in that** the penalty anti-divergence coefficient $DAC_{pen}(t)$ is obtained by the following equation: $DAC_{pen}(t) = max(DAC_{MaxPen}(\vec{a}(t) * \theta_{\text{int}}(t)), 0)$ where $DAC_{MaxPen}$ is a predetermined maximum value of the anti-divergence penalty coefficient $DAC_{pen}(t)$, $\vec{a}(t)$ the longitudinal acceleration of the motor vehicle (10) and $\theta_{int}(t)$ is the pitch angle of the sensor (12) estimated by integrating the relative movement of the sensor (12) at a current time t.

9. The method according to claims 6, 7, and 8, **characterised in that** the anti-divergence coefficient DAC(t) is obtained by the following equation: $DAC(t) = min(min(DAC_{rel}(t), DAC_{\vec{a}}(t)) + DAC_{pen}(t), 1)$ with $DAC_{rel}(t)$, the relative anti-divergence coefficient that depends on the movement of the sensor *(12)*, $DAC_{\vec{a}}(t)$ the acceleration anti-divergence coefficient, and $DAC_{pen}(t)$, the penalty anti-divergence coefficient.

10. The method according to claim 5, **characterised in that** the quality of the estimation of the first pitch angle $\theta_1(t)$ depends on the quality of the relative angle $\theta_{rel}(t)$ and the quality of the calibration angle $\theta_{calib}(t)$.

11. The method according to any of the preceding claims, **characterised in that** the second method for estimating the second pitch angle $\theta_2(t)$ of the sensor (12) consists of processing the images acquired by the sensor (12) to recognize, in each image, the shape of marking lines (22, 24) on the route (21) on which the motor vehicle (10) is traveling and to deduce from them the estimate of the second pitch angle $\theta_2(t)$.

12. Method according to claim 11, **characterised in that** the second method for estimating the second pitch angle $\theta_2(t)$ of the sensor (12) consists of:

- analysing at least one image acquired by the sensor (12) at a time t to recognize marking lines (22, 24) on the surface (21) of the route in said image, and selecting a plurality of points (P) that belong to the marking lines (22, 24) on the surface of the route,
- define a vanishing point (O1) at the intersection of said marking lines (22, 24), and
- compare the position of said vanishing point (O1) with the position of the optical centre (O2) of the sensor (12) to estimate the second pitch angle $\theta_2(t)$ of the sensor (12).

13. The method according to claim 12, **characterised in that** the quality of the estimation of the second pitch angle $\theta_2(t)$ depends on the number of points (P) selected belonging to the marking lines (22, 24) on the ground and on the length of said marking lines (22, 24) visible in the acquired image.

14. Method according to any of the preceding claims, **characterised in that** the first pitch angle $\theta_1(t)$ of the sensor (12) is a pitch angle that corresponds to an angular movement of the sensor (12) about an axis (A) that is generally perpendicular to the longitudinal trajectory of the motor vehicle (10).

15. A dynamic estimation device (18) for estimating the pitch of a motor vehicle (10) by means of at least one image acquisition sensor (12) which is mounted on said motor vehicle (10), designed to implement the method according to any of the preceding claims, said device comprising at least one image acquisition sensor (12) mounted on said vehicle (10) and a processing unit (16) for determining the first pitch angle $\theta_1(t)$ and the second pitch angle $\theta_2(t)$ of the sensor (12).

FIG. 1

FIG. 2

FIG. 3

## FIG. 4

FIG. 5

FIG. 6

**EP 4 430 569 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3579191 B1
- US 6678631 B2
- CN 111323047 A